(19) Europäisches Patentamt
European Patent Office
Office européen des brevets

(11) Publication number: **0 129 725 B1**

(12) # EUROPEAN PATENT SPECIFICATION

(45) Date of publication of patent specification: **14.03.90**

(51) Int. Cl.$^5$: **C 08 F 220/20**, C 08 F 291/00, C 08 F 263/04 // (C08F291/00, 220:20)

(21) Application number: **84106006.4**

(22) Date of filing: **25.05.84**

(54) **Improved low shrinking curable poly(acrylate) molding compositions.**

(30) Priority: **26.05.83 US 498578**
**26.05.83 US 498494**

(43) Date of publication of application:
**02.01.85 Bulletin 85/01**

(45) Publication of the grant of the patent:
**14.03.90 Bulletin 90/11**

(84) Designated Contracting States:
**DE FR GB IT SE**

(56) References cited:
**EP-A-0 069 340**
**GB-A-2 107 341**
**US-A-3 718 714**
**US-A-3 789 051**
**US-A-4 212 697**

**CHEMICAL ABSTRACTS, vol. 96, no. 22, May 1982, page 43, no. 182171u, Columbus, Ohio, US; & JP - A - 82 16 022 (MITSUBISHI PETROCHEMICAL CO., LTD.) 27-01-1982**

(73) Proprietor: **UNION CARBIDE CORPORATION**
**39 Old Ridgebury Road**
**Danbury Connecticut 06817 (US)**

(72) Inventor: **Domeier, Linda Ann**
**5 Farm Road Apartment 164**
**Somerville New Jersey 08876 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 129 725 B1

## Description

This invention is directed to curable molding compositions containing a mixture of a poly(acrylate); a polymerizable ethylenically unsaturated monomer which serves to crosslink the poly(acrylate) to a thermoset product; at least one of the following: (i) one or more crosslinkable vinyl monomers having a reactivity ratio ($r_1$) with styrene of greater than one, (ii) an epoxy compound having at least one 1,2-epoxy group per molecule, and (iii) an unsaturated fatty acid ester; and a thermoplastic polymer low profile additive. The curable molding compositions exhibit inproved shrink control during the curing reaction. This invention is also directed to reinforced thermoset resin articles prepared from these curable molding compositions and containing one or more fibers with a melting point or a glass transition temperature above about 130°C which exhibit generally improved surface appearance quality. Fiber reinforced thermoset resin articles can be produced from the curable molding compositions of this invention by a very rapid injection molding process which is typically less than about two minutes from the time the cure of the resin mixture is initiated.

It is well known that curable polyester resin systems are widely utilized in making fiber reinforced thermoset articles. The polyesters employed in these resin systems are generally the reaction products of a dicarboxylic acid or anhydride with a polyhydric alcohol. Fiber reinforced molding composites based on polyester resins systems have been advantageously employed in both bulk molding compound (BMC) formulations and sheet molding compounds (SMC) formulations. A technical improvement that has made a significant contribution to commercial polyester molding technology is the use of low profile additives to reduce shrinkage during the curing reaction and to thereby improve the dimensional stability and surface smoothness of the fiber reinforced thermoset composite.

A further technical improvement that has made a significant contribution to commercial polyester molding technology is the development of chemically thickened polyester resin systems. Chemical thickening is generally always employed in sheet molding compounds (SMC) and is increasingly being used in bulk molding compounds (BMC). In such systems, a metal oxide or hydroxide such as magnesium oxide or magnesium hydroxide is added to, for example, the uncured polyester/low profile additive along with fillers, glass fiber and other standard materials. The metal oxide or hydroxide interacts with residual acidity in the polyester to build viscosity. The thickened system is relatively tack free and easy to handle, and the high viscosity carries the glass fiber reinforcement to the extremities of the mold during crosslinking of the system.

Other thermoset resin systems based on poly(acrylates) have been developed which can be used to prepare fiber reinforced molding composites by rapid injection molding technology. The poly(acrylates) employed in these resin systems are generally prepared by the reaction of acrylic acid or methacrylic acid or their simple esters with a polyhydric alcohol. Poly(acrylate) resin systems generally have a relatively low viscosity so that they can be used to produce thermoset resin articles containing up to about 75 weight percent of reinforcing fibers by a rapid injection molding process. Chemical thickening is not employed in such poly(acrylate) resin systems.

U.S. Patent 4,327,013 describes curable molding compositions which contain a mixture of (a) one or more fibers with a melting point or a glass transition temperature above about 130°C, (b) a poly(acrylate) characterized by the following empirical formula:

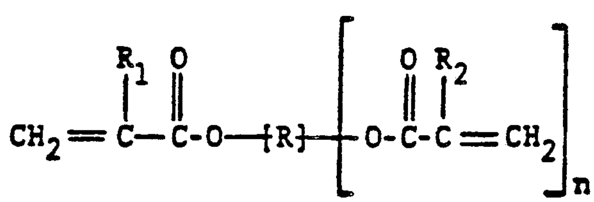

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3, (c) an ethylenically unsaturated monomer which is soluble in and copolymerizable with (b), and (d) an elevated temperature free radical curing catalyst capable of affecting the co-reaction of (b) with (c). This patent additionally describes an injection molding process for producing high performance reinforced thermoset molded articles by (i) forming a mixture of the above-described curable molding composition, (ii) providing the mixture into a heatable mold and (iii) molding the mixture at a temperature sufficient to cause the initiation of the co-reaction of (b) with (c) at a temperature not greater than 150°C and (iv) completing the molding in less than 6 minutes from the time of the initiation of the co-reaction.

EP—A—69340 describes a curable molding composition containing a mixture of (a) a poly(acrylate) characterized by the following empirical formula:

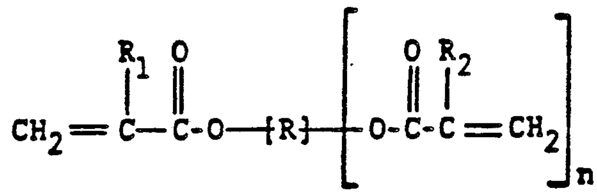

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3, (b) acrylic or methacrylic acid or a functionalized derivative thereof having a molecular weight of less than 300 which is different from (a), and (c) an ethylenically unsaturated monomer which is soluble in and copolymerizable with (a) and (b) and which is different from (a) and (b). The compositions can also contain one or more fibers with a melting point or a glass transition temperature above about 130°C. The combination of components in these compositions produce reinforced articles having a particularly good balance of mechanical properties by a very rapid injection mold cycle which is typically less than about 2 minutes from the time the cure of the resin is initiated.

EP—A—68487 describes curable molding compositions used for the rapid fabrication of fiber reinforced thermoset resin articles having improved mechanical properties which contain a mixture of (a) a thermosettable organic material containing two or more polymerizable carbon-carbon double bonds which can include a poly(acrylate) characterized by the following empirical formula:

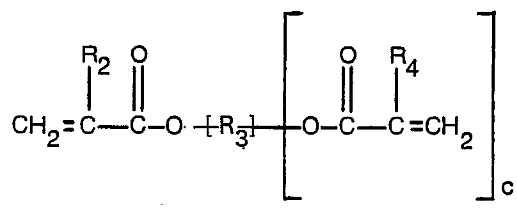

wherein $R_3$ is the hydroxy-free residue of an organic polyhydric alcohol which contained alcoholic hydroxyl groups bonded to different carbon atoms, $R_2$ and $R_4$ are independently hydrogen or methyl, and c is 1 to 3, (b) acrylic or methacrylic acid or a functionalized derivative thereof having a molecular weight of less than 300 which is different from (a), and (c) an ethylenically unsaturated monomer which is soluble in and copolymerizable with (a) and (b) and which is different from (a) and (b). The compositions can also contain one or more fibers with a melting point or a glass transition temperature above about 130°C. The combination of components in these compositions produce reinforced articles having a particularly good balance of mechanical properties by a very rapid injection mold cycle which is typically less than about 2 minutes from the time the cure of the resin is initiated.

CA—A—1196447 describes curable molding compositions used for the rapid fabrication of fiber reinforced thermoset resin articles having improved mold release characteristics which contain (a) a thermosettable organic material containing two or more polymerizable carbon-carbon double bonds which can include a poly(acrylate) characterized by the following empirical formula:

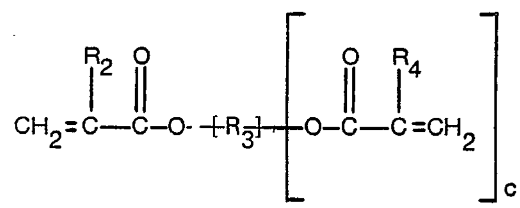

wherein $R_3$ is the hydroxy-free residue of an organic polyhydric alcohol which contained alcoholic hydroxyl groups bonded to different carbon atoms, $R_2$ and $R_4$ are independently hydrogen or methyl, and c is 1 to 3 (b) a monoethylenically unsaturated monomer which forms a liquid homogeneous mixture with and is copolymerizable with (a), and (c) a thermosettable organic material containing two or more polymerizable carbon-carbon double bonds having a cross-link density of greater than (a) and containing allyl, vinyl, acrylic and methacrylic types of carbon-carbon double bonds. This application additionally describes an improved process for rapidly fabricating fiber reinforced thermoset resin articles having improved mold release characteristics in molds having shapes that cause problems in releasing the molded article therefrom.

EP—A—68511 describes curable molding compositions used for the rapid fabrication of fiber reinforced thermoset resin articles having improved mechanical properties which contain (a) a

thermosettable organic material containing two or more polymerizable carbon-carbon double bonds which can include a poly(acrylate) characterized by the following empirical formula:

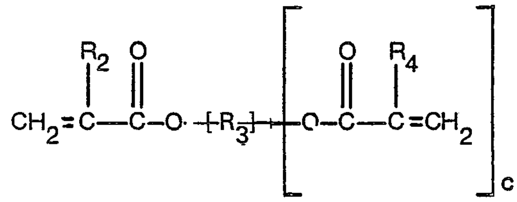

wherein $R_3$ is the hydroxy-free residue of an organic polyhydric alcohol which contained alcoholic groups bonded to different carbon atoms, $R_2$ and $R_4$ are independently hydrogen or methyl, and c is 1 to 3, (b) an ethylenically unsaturated monomer which forms a liquid homogeneous mixture with and is copolymerizable with (a) and is different from (a), and (c) an effective amount of an initiator or a mixture of initiators characterized by a ten-hour half-life temperature, or in the case of a mixture of initiators, an average ten-hour half-life temperature, of greater than about 50°C and less than 105°C, which produces on decomposition less than 1.0 milliliters of gas per gram of resin as measured at a temperature of 25°C and a pressure of one atmosphere. This application additionally describes an improved process for rapidly fabricating fiber reinforced thermoset resin articles having improved mechanical properties utilizing the above-described curable molding compositions therein.

Moreover, US—A—3 789 051 discloses a resin composition which comprises, among others a base monomer selected from vinyl substituted aromatic compounds containing six aromatic carbon atoms, monofunctional ethylenically unsaturated carboxylic acid esters and mixtures thereof; an acid monomer system comprising 20 to 100 percent by weight of ethylenically unsaturated carboxylic acid and 0 to 80 percent by weight of a compound selected from ethylene glycol diesters of ethylenically unsaturated carboxylic acids, divinyl aromatic compounds, difunctional ethylenically unsaturated carboxylic acid esters, ethylenically unsaturated carboxylic acid anhydrides, polyfunctional amines, aromatic diisocyanates and mixtures thereof; and a thermoplastic polymer selected from polymers of vinyl substituted aromatic compounds containing six aromatic carbon atoms, acrylic polymers and mixtures thereof. Said compositions mandatorily contain a thickening agent which is to provide uniform molding. The surface appearance of articles molded from said compositions is not mentioned in said document.

While poly(acrylate) resin systems provide for the rapid production of high performance reinforced thermoset resin articles with generally minimal surface requirements such as automotive structural components and the like, it is highly desirable that such reinforced thermoset resin articles have improved surface qualities which will allow the molded article to be used in the rapid production of surface critical articles or parts such as automobile exteriors and the like. It is highly desirable that such surface critical articles or parts have very low profile surfaces which are essentially free of warpage, undulations, fiber prominence or similar defects. There is, therefore, a need to provide curable low profile poly(acrylate) resin systems which exhibit reduced shrinkage during the curing reaction and thereby afford improved surface appearance in the reinforced molded articles obtainable therefrom.

It has been found as a result of the present invention that curable molding compositions containing a mixture of a poly(acrylate) a polymerizable ethylenically unsaturated monomer which serves to crosslink the poly(acrylate) to a thermoset product; at least one of the following: (i) one or more crosslinkable vinyl monomers having a reactivity ratio ($r_1$) with styrene of greater than one, (ii) an epoxy compound having at least one 1,2-epoxy group per molecule, and (iii) an unsaturated fatty acid ester; and a thermoplastic polymer low profile additive exhibit improved shrink control during the curing reaction. Reinforced thermoset resin articles containing one or more fibers with a melting point of a glass transition temperature above about 130°C and prepared from the curable molding compositions of this invention also exhibit generally improved surface appearance quality.

The present invention is directed to curable molding compositions comprising a mixture of: (a) a poly(acrylate) characterized by the following empirical formula:

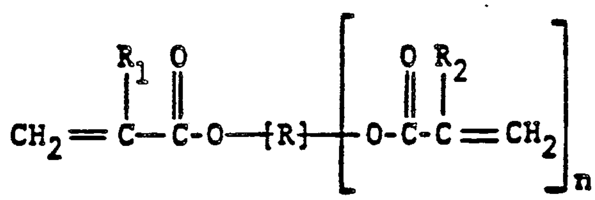

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3; (b) an ethylenically unsaturated monomer which is soluble in and copolymerizable with (a); (c) at least one

of the following: (i) one or more crosslinkable vinyl monomers having a reactivity ratio ($r_1$) with styrene of greater than one; (ii) an epoxy compound having at least one 1,2-epoxy group per molecule; and (iii) an unsaturated fatty acid ester; and (d) a thermoplastic polymer low profile additive which is soluble in the mixture of (a), (b) and (c).

In a preferred embodiment, the present invention is directed to curable molding compositions comprising a mixture of: (a) a poly(acrylate) characterized by the following empirical formula:

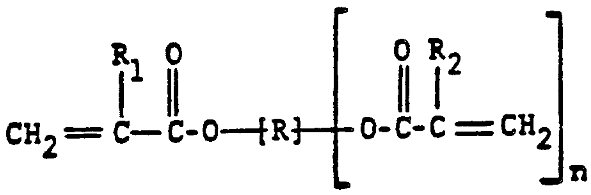

wherein R is the hydroxy-free residue of an organic polyhydric alcohol which contained alcoholic hydroxyl groups bonded to different carbon atoms, $R_1$ and $R_2$ are independently hydrogen or methyl and n is 1 to 3; (b) an ethylenically unsaturated monomer which is soluble in and copolymerizable with (a); (c) a crosslinkable vinyl monomer having a reactivity radar ($r_1$) with styrene of greater than one and at least one of the following: (i) a second crosslinkable vinyl monomer having a reactivity ratio ($r_1$) with styrene of greater than one; (ii) an epoxy compound having at least one 1,2-epoxy group per molecule; and (iii) an unsaturated fatty acid ester; and (d) a thermoplastic polymer low profile additive which is soluble in the mixture of (a), (b) and (c).

The curable molding compositions can optionally contain meta- and/or para-divinylbenzene, an initiator, a mold release agent, fibers, fillers and other additives. The curable molding compositions exhibit improved shrinkage control during the curing reaction and the reinforced thermoset resin products prepared therefrom exhibit generally improved surface appearance quality in comparison with curable molding compositions and reinforced thermoset resin products prepared therefrom which do not contain a thermoplastic polymer low profile additive as described herein and at least one of the following: (i) one or more crosslinkable vinyl monomers having a reactivity ratio ($r_1$) with styrene of greater than one; (ii) an epoxy compound having at least one 1,2-epoxy group per molecule; and (ii) an unsaturated fatty acid ester. There is known to be a strong correlation between the cure shrinkage of a curable molding composition and the surface appearance quality of fiber reinforced thermoset resin article prepared therefrom.

The unfilled curable molding composition of this invention have a low viscosity, i.e., from about 10 to about 1000 mPa·s (centipoise), preferably less than about 600 mPa·s (centipoise), so that they can be used to produce thermoset resin articles containing up to about 75 weight percent of reinforcing fibers by a very rapid injection molding process. A low curable molding composition viscosity is highly desirable in a rapid injection molding process in order to avoid any movement of the reinforcing fibers during the injection step. The reinforcing fibers having a melting point or a glass transition temperature above about 130°C and include, for example, fiberglass, carbon fibers, aromatic polyamide fibers, and mixtures thereof. Fiber reinforced thermoset resin articles can be produced from the curable molding compositions of this invention by a very rapid injection molding process which is typically less than two minutes, often times less than one minute, from the time the cure of the resin mixture is initiated. The curable molding compositions do not require the use of thickening agents in the molding technology described herein.

The poly(acrylates) useful in the curable molding compositions of this invention are advantageously compatible or soluble with a large variety of low profile additives. In the rapid fabrication of fiber reinforced thermoset resin articles, it is importnat that a homogeneous solution or dispersion of poly(acrylate), low profile additive and other ingredients be injected into the molding apparatus in order to provide improved surface appearance properties in the reinforced thermoset articles. A common problem with many polyester resins is the limited solubility of certain low profile additives therein and the tendency of the polyester/low profile additive mixture to separate into two phases.

The curable molding compositions of this invention are particularly suitable for the rapid fabrication of fiber reinforced thermoset resin articles having improved surface appearance properties. The fiber reinforced thermoset resin articles prepared from the curable molding compositions can have utility in surface critical molding articles or parts such as automobile exteriors and the like. Surface critical molding articles or parts have very low profile surfaces which are essentially free of warpage, undulations, fiber prominence and similar defects.

The invention is further directed to an improved process for producing a fiber reinforced article which comprises the steps of (a) providing in a heatable matched metal die mold, a bonded web of one or more of said fibers having a melting point or a glass transition temperature above about 130°C, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic

material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom, wherein the improvement comprises a resin composition comprising a mixture of: (1) a poly(acrylate) characterized by the following empirical formula:

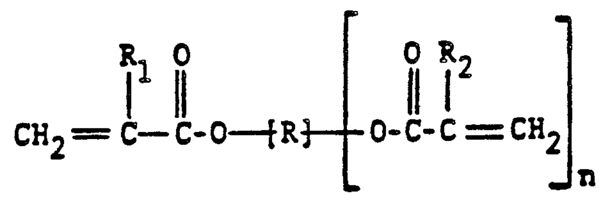

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3; (ii) an ethylenically unsaturated monomer which is soluble in and copolymerizable with (i); (iii) at least one of the following; (1) one or more crosslinkable vinyl monomers having a reactivity ratio ($r_1$) with styrene of greater than one; (2) an epoxy compound having at least one 1,2-epoxy group per molecule; and (3) an unsaturated fatty acid ester; and (iv) a thermoplastic polymer low profile additive which is soluble in the mixture of (i), (ii) and (iii).

In a preferred embodiment, the improved process for producing a fiber reinforced article utilizes a resin composition comprising a mixture of: (i) a poly(acrylate) characterized by the following empirical formula:

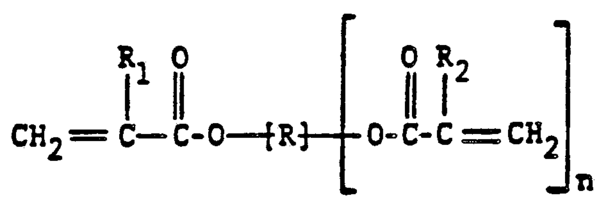

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3; (ii) an ethylenically unsaturated monomer which is soluble in and copolymerizable with (i); (iii) a crosslinkable vinyl monomer having a reactivity ratio ($r_1$) with styrene of greater than one and at least one of the following: (1) a second crosslinkable vinyl monomer having a reactivity ratio ($r_1$) with styrene of greater than one; (2) an epoxy compound having at least one 1,2-epoxy group per molecule; and (3) an unsaturated fatty acid ester; and (iv) a thermoplastic polymer low profile additive which is soluble in the mixture of (i), (ii) and (iii).

The fiber reinforced article prepared by the above described process is also a part of this invention as other fiber reinforced molded articles prepared from the curable molding compositions.

US—A—4575473 describes curable molding compositions containing a mixture of a poly(acrylate), a polymerizable ethylenically unsaturated monomer which serves to crosslink the poly(acrylate) to a thermoset product, and a thermoplastic polymer low profile additive. The curable molding compositions exhibit improved shrink control during the curing reaction. This patent also describes reinforced thermoset resin articles containing one or more fibers with a melting point or a glass transition temperature above about 130°C which exhibit generally improved surface appearance quality. Fiber reinforced thermoset resin articles can be produced from the curable molding compositions by a very rapid injection molding process which is typically less than about two minutes from the time the cure of the resin mixture is initiated.

In US—A—4 487 798 there are described curable molding compositions containing a mixture of a poly(acrylate), a polymerizable ethylenically unsaturated monomer which serves to crosslink the poly(acrylate) to a thermoset product, unsubstituted or substituted meta- and/or para-divinylbenzene, and a thermoplastic polymer low profile additive. The curable molding compositions exhibit improved shrink control during the curing reaction. This application also describes reinforced thermoset resin articles containing one or more fibers with a melting point or a glass transition temperature above about 130°C which exhibit generally improved surface appearance quality. Fiber reinforced thermoset resin articles can be produced from the curable molding compositions by a very rapid injection molding process which is typically less than about two minutes from the time the cure of the resin mixture in initiated.

US—A—4 585 833 describes curable molding compositions containing a mixture of a poly(acrylate), a polymerizable ethylenically unsaturated monomer which serves to crosslink the poly(acrylate) to a thermoset product, a thermoplastic polymer low profile additive, and a free radical initiator mixture containing at least one initiator with a 10-hour half-life temperature ($t_{1/2}$) of greater than about 90°C and at

least one initiator with a 10-hour half-life temperature ($t_{1/2}$) of less than about 90°C. The curable molding compositions exhibit improved shrink control during the curing reaction. This patent also describes reinforced thermoset resin articles containing one or more fibers with a melting point or a glass transition temperature above about 130°C which exhibit generally improved surface appearance quality. Fiber reinforced thermoset resin articles can be produced from the curable molding compositions by a very rapid injection molding process which is typically less than about two minutes from the time the cure of the resin mixture is initiated.

The poly(acrylate) or blend of poly(acrylates) suitable for use in the present invention is characterized by the following empirical formula:

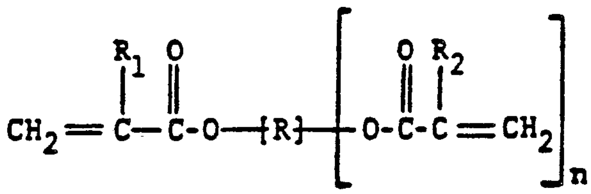

wherein R is the hydroxy-free residue of an organic polyhydric alcohol which contained alcoholic hydroxyl groups bonded to different carbon atoms, $R_1$ and $R_2$ are independently hydrogen or methyl, n is a value of at least 1, preferably a value of from 1 to 3.

The polyhydric alcohol suitable for preparing the poly(acrylate) typically contains at least two carbon atoms and may contain 2 or more hydroxyl groups. These polyhydric alcohols include alkane diols, triols, tetraols, aliphatic ether containing diols, triols, tetraols, cycloaliphatic containing diols, triols, and tetraols, and aromatic containing diols, triols, and tetraols, and the like. Specific illustrations of organic polyols suitable in the practice of this invention include the following: ethylene glycol, diethylene glycol, 2,2,4-trimethyl-1,3-pentanediol, dipropylene glycol, propylene glycol, polypropylene glycol having an average molecular weight of about 150 to about 600, triethylene glycol, 1,4-cyclohexanedimethanol, neopentyl glycol, 2,2-dimethyl-3-hydroxypropyl-2,2-dimethyl-3-hydroxypropionate, polyethylene glycol having an average molecular weight of about 150 to about 600, 2,2-bis[4-(2-hydroxyethoxy)phenyl]propane, 2,2-bis[4-(2-hydroxypropoxy)phenyl]propane, triethanolamine, 1,3-butanediol, tetraethylene glycol, 2,2-bis(4-hydroxyphenyl)propane, glycerine, trimethylolpropane, 1,4-butanediol, the polycabrolactone ester of trimethylolpropane which contains about 1.5 equivalents of capolacetone ester, the polycaprolactone ester of trimethylolpropane which contains about 3.6 equivalents of caprolactone, 2-ethyl-1,3-hexanediol, 1,5-pentanediol, tripropylene glycol, 2,2-bis-(4-hydroxycyclohexyl)propane, 1,2,6-hexane triol, 1,3-propanediol, 1,6-hexanediol and the like. Mixtures of the aforementioned polyols may also be used in this invention.

The poly(acrylate) of the aforementioned organic polyhydric alcohol can be prepared by the reaction of acrylic acid or methacrylic acid or their simple esters with the polyhydric alcohol under conditions well known in the art. Poly(acrylates) produced by the addition of acrylic or methacrylic acid across ethylenically unsaturated bonds may also be used in the practice of this invention.

The preferred poly(acrylates) include one or more of ethoxylated bisphenol A dimethacrylate, tetraethylene glycol dimethacrylate, diethylene glycol dimethacrylate, ethoxylated bisphenol A diacrylate, propoxylated bisphenol A dimethacrylate, propoxylated bisphenol A diacrylate, tetraethylene glycol diacrylate, diethylene glycol diacrylate, ethylene glycol dimethyacrylate, trimethylolpropane triacrylate, and trimethylolpropane trimethacrylate. The poly(acrylate) is present in the curable molding compositions of this invention in an amount of from about 10 to about 75 weight percent, preferably from about 15 to about 50 weight percent.

Unless otherwise indicated, the term "weight percent" used herein refers to the total weight of components (a), (b), (c) and (d) of the curable molding compositions exclusive of other additives such as fillers.

The poly(acrylates) suitable for use in the present invention can be further blended with one or more of the following thermosettable organic materials containing two or more polymerizable carbon-carbon double bonds: (1) an unsaturated polyester; (2) a half-ester of a hydroxyl-terminated polyester; (3) a half-ester of an organic polyol; (4) a vinyl ester resin produced by the addition of an unsaturated monocarboxylic acid to a polyepoxide; (5) a urethane poly(acrylate); (6) an unsaturated isocyanurate; and the like. These materials can be blended with the poly(acrylates) in an amount such that the curable molding compositions remain homogeneous. Suitable thermosettable organic materials which can be blended with the poly(acrylates) are more fully described, for example, in EP—A—68511, CA—A—1196447 and EP—A—68487.

Suitable ethylenically unsaturated monomers which may be employed in the practice of this invention are one or more ethylenically unsaturated copolymerizable monomers which are soluble in and copolymerizable with the poly(acrylate). These ethylenically unsaturated monomers contain at least a single —CH=C< group, and preferably a $CH_2$=C< group and include styrene and its derivatives and homologues, diallylphthalate, triallyl isocyanurate, nonfunctionalized esters of acrylic or methacrylic acid

(such as ethyl acrylate, butyl acrylate, and methyl methacrylate), unsaturated nitriles (such as acrylonitrile and methacrylonitrile) and the like. Also included herein are low levels of maleic anhydride.

Other suitable ethylenically unsaturated monomers include acrylic or methacrylic acid or a functionalized derivative thereof having a molecular weight of less than 300 and which is different from the poly(acrylate). Mixtures of these may also be used in this invention. The functionalized derivatives are characterized by the presence of acrylate, methacrylate, acrylamide, and methacrylamide groups and also by the presence of functional groups such as hydroxyl, amino, alkylamino and epoxide, for example. The molecular weight of these monomers is typically less than 300. Preferred monomers are characterized by the following formula:

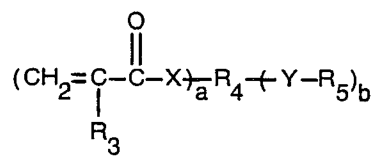

wherein $R_3$ is independently hydrogen or methyl; X and Y are independently —O— or

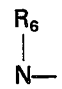

wherein $R_6$ is hydrogen or lower alkyl; $R_4$ is an aliphatic or aromatic radical containing from 2 to about 10 carbon atoms, optionally containing —O— or

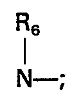

$R_5$ is hydrogen or an aliphatic or aromatic radical containing from 1 to 10 carbon atoms; and a and b are integers of or greater than 1, preferably 1 to 3.

These functionalized derivatives of acrylic or methacrylic acid include 2-hydroxyethyl acrylate, 2-hydroxyethyl methacrylate, hydroxylpropyl acrylate, hydroxypropyl methacrylate, hydroxybutyl acrylate, hydroxybutyl methacrylate, 2-aminoethyl acrylate, 2-aminoethyl methacrylate, 2-methylaminoethyl acrylate, 2-methylaminoethyl methacrylate, 2-dimethylaminoethyl acrylate, 2-dimethylaminoethyl methacrylate, 2-hydroxyethyl acrylamide, 2-hydroxyethyl methacrylamide, 2-aminoethyl acrylamide, 2-aminoethyl methacrylamide, diethylene glycol monoacrylate, diethylene glycol monomethacrylate, 2-methoxyethyl acrylate, 2-methoxyethyl methacrylate, pentaerythritol monoacrylate, pentaerythritol monomethacrylate, pentaerythritol diacrylate, pentaerythritol dimethacrylate, pentaerythritol triacrylate, glycerol monoacrylate, glycerol monomethacrylate, trimethylolpropane monoacrylate, trimethylolpropane monomethacrylate, glycidyl methacrylate, glycidyl acrylate, hydroxymethyl acrylamide and the like, or mixtures thereof. It is understood that several isomers of many of these monomers exist and would be suitable for use herein either as individual components or as mixtures with any of the other monomers. Similarly, it is understood that additional derivatives containing aromatic rings and other alkyl groups in the acid or ester portion of the above formula may also be included.

Preferred functionalized derivatives of acrylic or methacrylic acid employed in the practice of this invention include 2-hydroxyethyl mthacrylate, 2-hydroxyethyl acrylate and hydroxypropyl acrylate.

Mixtures of the aforementioned ethylenically unsaturated monomers may be effectively employed in the practice of this invention. Such mixtures may be advantageous in improving the solubility of the thermoplastic polymer low profile additive in the curable molding compositions of this invention. Preferred ethylenically unsaturated monomer mixtures include styrene and at least one of 2-hydroxyethyl methacrylate, 2-hydroxyethyl acrylate and hydroxypropyl acrylate.

The preferred ethylenically unsaturated monomer contemplated in the practice of this invention is styrene or a mixture of styrene and 2-hydroxyethyl methacrylate. The ethylenically unsaturated monomer is present in the curable molding compositions of this invention in an amount of from about 10 to about 75 weight percent, preferably from about 15 to about about 50 weight percent.

The curable molding compositions of this invention include as an essential ingredient therein at least one of the following: (i) one or more crosslinkable vinyl monomers having a reactivity ratio ($r_1$) with styrene of greater than one; (ii) an epoxy compound having at least one 1,2-epoxy group per molecule; and (iii) an unsaturated fatty acid ester.

In a preferred embodiment, the curable molding compositions of this invention include as an essential ingredient therein a crosslinkable vinyl monomer having a reactivity ratio ($r_1$) with styrene of greater than one, preferably vinyl acetate, and at least one of the following: (i) a second crosslinkable vinyl monomer having a reactivity ratio ($r_1$) with styrene of greater than one; (ii) an epoxy compound having at least one

1,2-epoxy group per molecule; and (iii) an unsaturated fatty acid ester. Mixtures of these ingredients are also suitable for use in the present invention. These ingredients are uniquely effective additives which improve shrinkage control during the curing reaction of the curable molding compositions and improve the surface appearance quality of the reinforced thermoset resin products prepared therefrom.

The crosslinkable vinyl monomers suitable for use in the present invention have a reactivity ratio ($r_1$) with styrene of greater than 1, preferably greater than 5, and most preferably greater than 20. Measuring the reactivity ratios of monomers is well known in the art as described, for example, in F. W. Billmeyer, Jr., *Textbook of Polymer Science*. Wiley-Interscience, pages 329—331.

The monomer reactivity ratios $r_1$ and $r_2$ are the ratios of the rate constant for a given radical adding its own monomer to that for its adding the other monomer. Thus $r_1<1$ means that the radical $M_1$ prefers to add $M_1$; $r_1<1$ means that it prefers to add $M_2$. In the system styrene ($M_1$)-methyl methacrylate ($M_2$), for example, $r_1 = 0.52$ and $r_2 = 0.46$. Each radical adds the other monomer about twice as fast as its own. Thus, methyl methacrylate is unsatisfactory as a crosslinkable vinyl monomer of component (c) in the molding compositions of this invention.

The following Table lists representative styrene-monomer reactivity ratios:

TABLE

| Monomer-1 | Monomer-2 | $r_1$ | $r_2$ |
|---|---|---|---|
| Styrene | Diethylfumarate | 0.30 | 0.07 |
| | Methyl Methacrylate | 0.52 | 0.46 |
| | Vinyl Acetate | 55 | 0.01 |
| | Vinyl Methyl Ether | 100 | 0.01 |
| | Vinyl Ethyl Ether | 90 | 0 |
| | Vinyl Nonanoate | 49.5 | 0.01 |
| | Vinyl Octadecanate | 68 | 0.01 |
| | Vinyl Stearate | 68 | 0.01 |
| | Vinyl Undecanoate | 29 | 0.02 |
| | Allyl Acetate | 90 | 0.00 |
| | Diethyl Maleate | 6.52 | 0.005 |
| | Ethyl 2-Ethoxyacrylate | 23.5 | 0 |
| | Vinyl Trimethoxysilane | 22 | 0 |

Other monomers suitable for use in this invention include vinyl norbornene, vinyl stearate, butyl vinyl ether, diallyl phthalate, octene-1, octene-2, 1-nonene, 1-decene, dodecene, vinyl cyclohexene, bicyclononadiene, dicyclopentadiene, and a compound of the following formula:

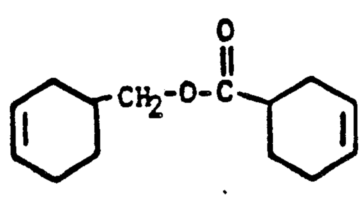

Mixtures of the above described monomers, for example, alpha-olefin mixtures, are also suitable for use in the present invention.

Preferred crosslinkable vinyl monomers having a reactivity ratio ($r_1$) with styrene of greater than one include vinyl acetate, dodecene, a mixture of 1-octene, 1-nonene and 1-decene, and a compound of the following formula:

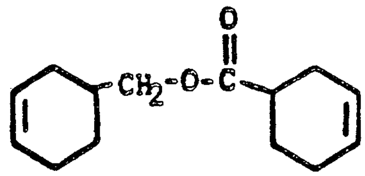

The crosslinkable vinyl monomers having a reactivity ratio ($r_1$) with styrene of greater than one can be present in the curable molding compositions of this invention in an amount of from about 1 to about 30 weight percent, preferably from about 3 to about 20 weight percent.

The epoxy compounds suitable for use in the present invention have at least one 1,2-epoxy group per molecule. The epoxy compounds can be based on aliphatic, cycloaliphatic or aromatic backbones. Thus, for example, bisphenol A based epoxy resins are included in the present invention.

One class of preferred epoxy compounds can be represented by the formula:

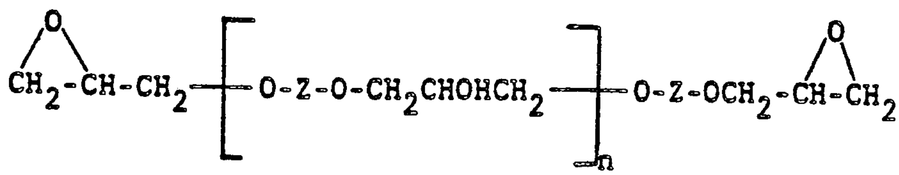

wherein n is an integer representing the number of repeating units and has a value of from 0 to about 10 and Z is an arylene radical having from 6 to about 20 carbon atoms.

The preferred arylene radical is

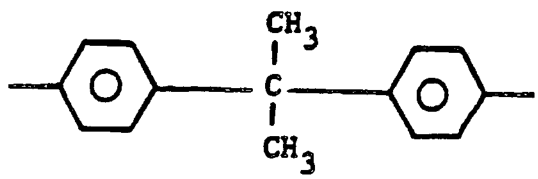

Still another preferred class of epoxy compounds are the 1,2-cycloaliphatic diepoxides. These epoxy compounds are exemplified by the following: 3,4-epoxycyclohexylmethyl 3,4-epoxycyclohexane carboxylate having the formula:

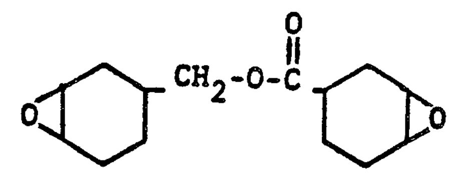

bis(2,3-epoxycyclopentyl)ether having the formula:

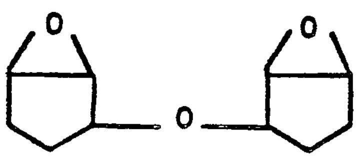

vinyl cyclohexene dioxide having the formula:

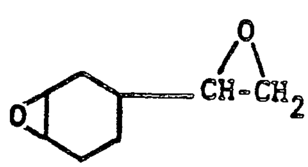

2-(3,4-epoxycyclohexyl-5,5-spiro)-(3,4-epoxy)cyclohexane-m-dioxane having the formula:

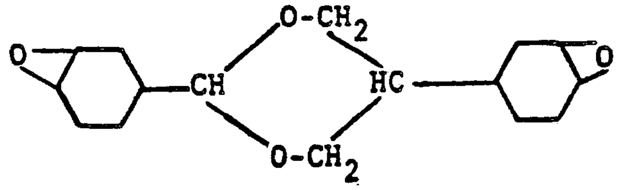

cyclohexylmethyl epoxycyclohexane carboxylate having the formula:

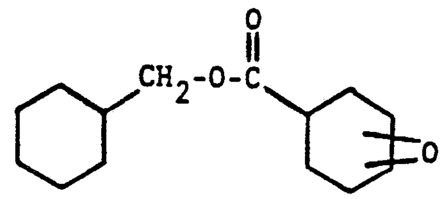

3-(3,4-epoxycyclohexane)-8,9-epoxy-2,4-dioxaspiro[5.5]-undecane having the formula:

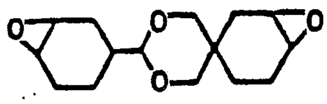

and bis(3,4-epoxy-cyclohexylmethyl) adipate having the formula:

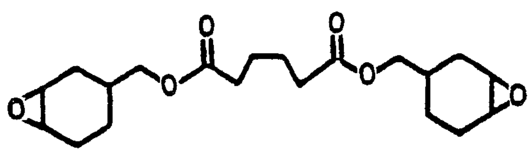

Other preferred epoxy compounds suitable for use in the present invention include epoxidized pentaerythritol tetratallate, epoxidized soy bean oil, octyl epoxytallate, epoxidized linseed oil and the like. Mixtures of the above-described epoxy compounds are also suitable for use in the present invention.

A general description of the preparation of epoxy compounds is presented in the Encyclopedia of Polymer Science and Technology, pp. 209—216, Vol. 6, Interscience Publishers, N.Y.C. 1967, which is incorporated herein by reference.

While the amount of epoxy compound used in the practice of this invention is not narrowly critical, it is preferred that the epoxy compound be present in the curable molding compositions of this invention in an amount of from about 1 to about 30 weight percent, most preferably from about 3 to about 20 weight percent.

The preferred unsaturated fatty acid esters suitable for use in the present invention include tall oil, soybean oil, linseed oil, tallates such as 2-ethylhexyl tallate, glycerol tallate, pentaerythritol tallate, glycerol oleate and the like. The unsaturated fatty acid esters can be present in the curable molding compositions of this invention in an amount of from about 1 to about 30 weight percent, preferably from about 3 to about 20 weight percent.

An essential component of the curable molding compositions of this invention is a thermoplastic polymer low profile additive. In one aspect, the thermoplastic polymer low profile additives that may be employed in this invention are thermoplastic polymers of vinyl acetate, saturated thermoplastic polyesters, and mixtures of the same. In another aspect of the invention, the thermoplastic polymer low profile additives that may be employed herein are thermoplastic polyalkyl acrylate or methacrylate polymers. In still another aspect of this invention, the thermoplastic polymer low profile additives that may be employed in this invention include homopolymers of styrene and substituted styrene and also copolymers containing styrene. The thermoplastic polymer low profile additives suitable for use in the present invention are soluble in the resin mixture of poly(acrylate), the ethylenically unsaturated monomer and the crosslinkable vinyl monomer, epoxy compound or unsaturated fatty acid ester. The resin mixtures useful in the curable molding compositions of this invention are advantageously compatible or soluble with a large variety of low profile additives.

Suitable thermoplastic vinyl acetate polymer low profile additives include poly(vinyl acetate) homopolymers and copolymers containing at least 50 weight percent vinyl acetate. Such polymers include, for example, vinyl acetate homopolymer; carboxylated vinyl acetate polymers including copolymers of vinyl acetate and ethylenically unsaturated carboxylic acids, such as acrylic acid, methacrylic acid, crotonic acid, maleic acid, fumaric acid, itaconic acid and the like or anhydrides such as maleic anhydride; vinyl acetate/vinyl chloride/maleic acid terpolymer, and the like. Reference is made to U.S. Patent No. 3,718,714

to Comstock, et al. and British Patent No. 1,361,841 to Comstock, et al. for descriptions of some of the suitable vinyl acetate polymer low profile additives.

The useful vinyl acetate polymer low profile additives ordinarily have molecular weights within the range of from about 10,000 to about 250,000, and preferably from about 25,000 to about 175,000. They are usually employed in the curable molding compositions of this invention in proportions of from about 5 to 25 weight percent, and preferably from about 8 to 16 weight percent.

Suitable thermoplastic saturated polyester low profile additives are, in general, low molecular weight saturated polymers of polymerizable linear and/or cyclic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least about 0.1, and preferably from about 0.15 to about 15 and higher. The preferred polymers of cyclic esters have a reduced viscosity of from about 0.2 to about 10.

Suitable polymers are further characterized by the following basic recurring structural Unit I

Unit I 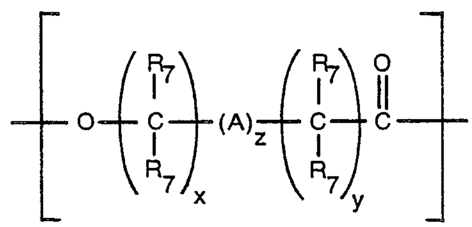

wherein each $R_7$, which can be the same or different, is hydrogen, halogen, i.e., chlorine, bromine, iodine, or fluorine, or a monovalent hydrocarbon radical generally containing a maximum of 12 carbon atoms, and preferably containing a maximum of eight carbon atoms. A is an oxy group, x is an integer having a value of 1 to 4 inclusive; y is an integer having a value of 1 to 4 inclusive; z is an integer having a value of 0 or 1, with the proviso that (a) the sum of $x + y + z$ is 4 to 6 inclusive and (b) the total number of $R_7$ variables which are substituents other than hydrogen does not exceed 2.

Illustrative of suitable monovalent hydrocarbon radicals for R are the following: alkyl radicals such as methyl, ethyl, isopropyl, n-butyl, sec-butyl, t-butyl, n-hexyl, 2-ethylhexyl, n-dodecyl, chloroethyl, chloropropyl and the like; alkoxy radicals such as methoxy, ethoxy, n-propoxy, n-hexoxy, n-dodecoxy and the like; aryl radicals such as phenyl, ethyl phenyl, n-propylphenyl, n-butylphenyl and the like; aryloxy radicals such as phenoxy, n-propylphenoxy, n-butylphenoxy and the like; cycloaliphatic radicals such as cyclopentyl, cyclohexyl and the like.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide, propylene oxide and the like.

Unit II 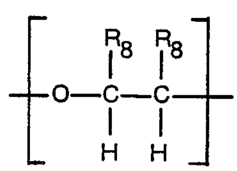

wherein each $R_8$, is as defined for $R_7$ of Unit I, or in which the two $R_8$ variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and Unit II does not involve or result in the direct bonding of two oxy groups i.e., —O—O—.

Particularly preferred polymers of cyclic esters are those which are characterized by the oxypentamethylene-carboxyl chain as seen in basic recurring structural Unit III

Unit III 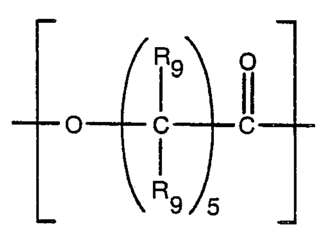

wherein each $R_9$ is hydrogen or lower alkyl, that is alkyl having a maximum of 4 carbon atoms, with the proviso that no more than three $R_9$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon-caprolactones, have been advantageously employed as low profile additives. Reference, for example, is made to U.S. Patent Nos. 3,549,586 and 3,668,178 to Comstock et al. for descriptions of thermoplastic saturated polyester low profile additives and carboxylated thermoplastic saturated polyester low profile additives prepared from cyclic esters.

Also included are polyesters based on diacids, such as adipic acid, and diols, such as 1,6-hexanediol. These polyesters are described in, for example, U.S. Patents 3,909,483; 3,994,853; 2,736,278; and 3,929,868.

The thermoplastic saturated polyester low profile additives may usually be employed in the curable molding compositions of this invention in proportions similar to those of thermoplastic vinyl acetate polymers, i.e., in proportions of from about 5 to about 25 weight percent, and preferably from about 8 to about 16 weight percent.

Also suitable in certain aspects of this invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids; and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid; polystyrene; styrene copolymers, such as, styrene/butadiene copolymers; cellulose acetate butyrate; alkylene oxide polymers; and the like.

The molecular weight of the alkyl acrylate or methacrylate polymers useful in the invention may vary over a wide range, from 10,000 to 1,000,000, and preferably from 25,000 to 500,000. The thermoplastic polyalkyl acrylate or methacrylate polymer should be present in the curable molding compositions of this invention in amounts ranging from about 1 to about 25 weight percent, and preferably from about 5 to about 20 weight percent.

Particularly suitable in certain aspects of this invention are thermoplastic polymer low profile additives including homopolymers of styrene and substituted styrene and also copolymers containing styrene. Such thermpolastic polymers are generally insoluble in many unsaturated polyester resins. In the resin systems of the present invention, these thermoplastic polymer low profile additives are soluble and form homogeneous molding compositions. The molecular weight of the polystyrene homopolymers or copolymers useful in this invention may vary over a wide range, showing melt flow values of from 1 to 50 grams per 10 minutes. The thermoplastic styrene polymer can be present in the curable molding compositions of this invention in amounts ranging from about 5 to about 25 weight percent and preferably from about 8 to about 16 weight percent.

The most preferred thermoplastic polymer low profile additives employed in the practice of this invention are polystyrene and a copolymer of vinyl acetate and acrylic acid.

A free radical initiator which initiates curing via the co-reaction of the poly(acrylate) and the ethylenically unsaturated monomer can also be included in the curable molding compositions of this invention. These initiators include azo compounds, peroxides, peresters, perketals, and the like including mixtures thereof.

Azo and peroxide initiators are described by, for example, Gallagher et al. "Organic Peroxides Review, Plastics Design and Processing", July 1978, pages 38—42, and August 1978, pages 60—67, inclusive. The technology disclosed in those two articles is incorporated herein by reference. The choice of the specific peroxide or azo initiators or mixtures thereof for the purpose of curing the molding compositions of this invention is within the purview of those having skill in this art and the manner in which such peroxides and azo initiators effect a desirable cure is generally characterized in the aforementioned articles.

Examples of such initiators include 1,1-di-t-butyl-peroxycyclohexane, 1,1-di-t-butylperoxy-3,3,5-trimethylcyclohexane, 2,2-di-t-butylperoxybutane, 2,2-di-t-butyl-peroxy-4-methyl-pentane, 2,2-dicumylperoxypropane, butyl 2,2-di-t-butylperoxyvalerate, 1,1-bis(2,2,4-trimethylpentyl-2-peroxy)-cyclohexane, 2,2'-azo-bis-isobutyronitrile, dibenzoyl peroxide, lauroyl peroxide, di-t-butyl peroxide, diisopropyl peroxide carbonate, t-butylperoxy-2-ethylhexanoate, t-butyl-perpivalate, 2,5-dimethylhexane-2,5-di-perethylhexanoate, t-butyl peroctoate, t-butyl perneodecanoate, t-butyl perbenzoate, t-butyl percrotonate, t-butyl perisobutyrate, di-t-butyl perphthalate, 1,1-bis(t-butylperoxy)-3,3,5-trimethylcyclohexane, bis(4-t-butyl-cyclohexyl)peroxydicarbonate, methyl ethyl ketone peroxide, 2,4-pentanedione peroxide, bis(t-butylperoxy)-diisopropylbenzene, 2,4,4-trimethylpentyl-2-peroxycyclohexane carboxylate, 2-t-butylazo-2-cyano-4-methylpentane, ethyl 3,3-di(butylperoxy)butyrate, and the like. These are commercially available materials.

The peresters and perketals may be used in combination with an acid cure accelerator as described in Netherlands published Patent Application No. 7604405. These acids include Bronsted acids with a $pK_a$ value lower than or equal to that of formic acid, such as hydrochloric acid, sulfuric acid, nitric acid, phosphoric acid, trichloroacetic acid, p-toluenesulfonic acid, and the like. Also, Lewis acids or metal halides with Lewis acid properties, such as boron trifluoride and the chlorides of iron, cobalt, zinc and aluminum, may be used.

Additionally, the above described initiators may be used in combination with other cure accelerators such as cobalt compounds. These cobalt compounds include cobalt naphthenate, cobalt-amine cure promoters (such as those designated as PEP 183-S and available from Air Products Incorporated), and the like. These cure accelerators operate by decomposing the curing catalysts at a temperature below their normal activation or decomposition temperature.

Mixtures of the initiators may be used herein, such as mixtures of peresters and/or perketals, of perketals and azo compounds, of peresters and azo compounds, or of an azo compound and a peroxide containing compound.

The concentration of the initiator can be varied within wide limits. As a representative range, the concentration can vary from about 0.25 to about 3.0 weight percent, preferably from about 0.5 to about 2.5 weight percent, and most preferably, from about 0.75 to about 2.0 weight percent, based on the weight of the curable molding composition.

The curable molding compositions of this invention can also include unsubstituted or substituted meta- and/or para- divinylbenzene. The aromatic ring can be substituted with alkyl, alkoxy, aryl or arylalkyl groups having from 1 to about 20 carbon atoms, or by hydroxy groups, halogens and the like. Preferred unsubstituted or substituted meta- and/or para- divinylbenzene employed in the practice of this invention includes unsubstituted meta- divinylbenzene, unsubstituted para- divinylbenzene and mixtures thereof. Commercial mixtures of these divinylbenzene isomers generally contain up to about 50 weight percent of the corresponding ethylvinylbenzene isomers and are useful in the practice of this invention. The unsubstituted or substituted meta- and/or para- divinylbenzene can be present in the curable molding compositions of this invention in an amount of from about 2 to about 75 weight percent, preferably from about 2 to about 30 weight percent.

The fibers suitable for use in this invention as reinforcing agents have a melting point or a glass transition temperature above about 130°C. These fibers include fiberglass, carbon fibers, aromatic polyamide fibers (such as aramid fibers sold by E. I. duPont de Nemours Company, Wilmington, Delaware, under the trademark of Kevlar®), metal fibers, such as aluminum and steel fibers, boron fibers, and the like. The carbon fibers include those having a high Young's modulus of elasticity and high tensile strength. These carbon fibers may be produced from pitch as described in U.S. Patents 3,976,729, 4,005,183 and 4,026,788, for example. The fibers suitable for use in this invention preferably have a length of at least 0.635 cm (¼ inch) and an average length of at least 1.27 cm (½ inch). Fibers with different lengths exceeding 0.635 cm (¼ inch) may be used provided that at least about 50 percent of the fibers have lengths greater than 1.27 cm (½ inch). Preferred fiber lengths are from 2.54 to 5.08 or more cm (1 to 2 or more inches). Continuous filaments may also be used. It is also within the scope of this invention to include the use of fiber reinforcements of shorter lengths and also fillers such as milled glass.

The preferred fibers are fiberglass, carbon fibers, aromatic polyamide fibers, and mixtures thereof. The molded article contains from about 10 to about 75 weight percent, preferably from about 15 to about 60 weight percent of the reinforcement fiber therein or from about 20 to about 40 weight percent of milled glass reinforcement.

It is furthermore desirable to utilize a vinyl polymerization inhibitor in those cases where the curable molding composition it to be stored and/or shipped. Suitable vinyl polymerization inhibitors are hydroquinone, para-benzoquinone, t-butyl catechol, quinhydrone, toluhydroquinone, mono-t-butyl hydroquinone, 2,5-di-t-butylhydroquinone, hydroquinone monomethyl ether, the biphenol derivatives described in U.S. Patent 4,158,027, and the like. The amount of inhibitor for the purpose of preventing vinyl polymerization can be that conventionally used, namely from about 100 to about 1000 ppm of the total weight of the curable molding composition.

An optional component of the curable molding compositions of this invention is a viscosity reducing agent. In one aspect the invention employs, generally in combination with thermoplastic vinyl acetate polymer low profile additives and thermoplastic saturated polyester low profile additives, a viscosity reducing agent which is an aliphatic monocarboxylic acid having at least 6 carbon atoms.

The aliphatic monocarboxylic acid employed usually has at least 6 carbon atoms in the chain, and is frequently a saturated or unsaturated fatty acid having from 6 to 24 or more carbon atoms in the chain. Such carboxylic acids may be caproic (hexanoic), caprylic (octanoic), capric ($C_{10}$), lauric ($C_{12}$), myristic ($C_{14}$), palmitic ($C_{16}$), palmitoleic ($c_{16}$), stearic ($C_{18}$), oleic ($C_{18}$), linoleic ($C_{18}$), lineolenic ($C_{18}$), and the like acids, and the acids may be either straight chain or branched chain. The viscosity reducing agent can be present in the curable molding compositions of this invention in amounts ranging from about 0.4 to about 6 weight percent, and preferably from about 1 to about 4 weight percent.

The curable molding compositions of this invention may also contain one or more of the known types of conventional additives, which are employed for their known purposes in the usual amounts.

Illustrative of such additives are mold release agents or lubricants, pigments, fillers such as clay, hydrated alumina, silica, calcium carbonate and others known to the art, and the like. These additives can be dissolved or dispersed in the curable molding compositions to form a uniform mixture.

The curable molding compositions of this invention are prepared by solution blending a poly(acrylate), an ethylenically unsaturated monomer, at least one of the following: (i) a crosslinkable vinyl monomer having a reactivity ratio ($R_1$) with styrene of greater than one; (ii) an epoxy compound having at least one 1,2-epoxy group per molecule; and (iii) an unsaturated fatty acid ester; a thermoplastic polymer low profile

additive, a free-radical curing agent and any other optional ingredients at ambient temperature. Insoluble additives such as calcium carbonate filler can be effectively dispersed in the curable molding compositions. This mixture constitutes the "resin portion" which is a term used herein.

The fiber reinforced molded articles of this invention can be prepared by injecting the resin portion into a bed of one or more of the fibers at a temperature of from about 120° to about 150°C and pressure of from about 0.689 to 41.3 MPa (100 to 6000 psi). The upper limit of pressure is dependent upon the clamping characteristics of the press. When the poly(acrylate) and ethylenically unsaturated monomer are copolymerized, a "networklike" copolymer is produced which, in combination with the fiber reinforcement, possess superior strength properties. The resulting fiber reinforced molded article also exhibits improved surface appearance resulting from the shrink controlling action of the thermoplastic polymer low profile additive.

A unique aspect of this invention is that an extremely rapid cure of the molding composition is achieved to produce a molded product. This rapid cure is achieved by heating the molding composition to a temperature which is sufficient to cause the initiation of the co-reaction of the poly(acrylate) and the ethylenically unsaturated monomer. This rapid cure results in completion of the molding operation, in less than about 2 minutes from the time the co-reaction is initiated.

The rapid process for making high performance reinforced thermoset molded articles comprises forming a mixture of (a) one or more fibers with a melting point or a glass transition temperature above about 130°C, and (b) the resin portion as described above. The mixture is provided into a heatable mold and molding of the mixture is effected at a temperature sufficient to cause the initiation of the co-reaction of the poly(acrylate) with the ethylenically unsaturated monomer at a temperature not greater than 150°C and the completion of molding in less than 2 minutes from the time of initiation of said co-reaction.

A preferred process for such rapid fabrication of a fiber reinforced molded article from the curable molding compositions of this invention is described in U.S. Patent Application Serial No. 135,906 entitled "Molding Process and Apparatus Therefore", and filed on April 14, 1980 in the name of R. Angell, Jr., which is incorporated herein by reference. In said process, the fiber reinforcement is comprised of one or more fibers with a melting point or a glass transition temperature above about 130°C. The process comprises the steps of (a) providing in a heatable matched metal die mold, a bonded web of one or more of said fibers, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom.

The preferred apparatus for use in preparing fiber reinforced molded articles from curable molding compositions in accordance with this invention is also described in U.S. Patent Application Serial No. 135,906, filed April 14, 1980. The apparatus is described as comprising: (a) a heatable matched metal die mold containing one or more cavities therein with means for opening said mold to expose such cavities, and closing the same, and means for controlling the injection of a thermosettable organic liquid to such cavities when the mold is closed, (b) means associated with said mold, whereby one or more fibers in the form of an interlocked mass are provided in a portion of the cavities thereof when the mold is open to expose such cavities and prior to the injection of the thermosettable organic liquid to such cavities when the mold is closed, (c) accumulator means associated with said mold which can contain a thermosettable liquid transportable to means for controlling injection of said liquid to such cavities, and (d) cooling means associated with the means for controlling the injection of such liquid to such cavities, whereby the temperature of the liquid in such injection means is maintained substantially below the temperature of the mold.

The following examples are illustrative of the present invention and are not intended as a limitation upon the scope thereof. The non-reinforced cured castings and cured glass reinforced composites were prepared and evaluated according to the following procedures.

Cure Shrinkage: determined by measuring the change in density between the liquid resin mixture prior to cure and a non-reinforced solid casting after cure. The castings were prepared by the preferred rapid fabrication molding process described hereinabove except that no reinforcement was contained in the mold. The density of the uncured liquid resin mixture was determined by measuring the liquid resin mixture weight in a tared volumetric flask. The liquid resin mixture was equilibrated in a 25°C bath before weighing. The density of the cured solid casting was determined by breaking the solid casting by hand into smaller fragments which were weighed on a triple beam balance. The same fragments were then suspended in water and weighed on a triple beam balance (a thin wire platform was suspended from the triple beam balance, tared in water and the casting fragments were then placed on the platform and weighed). The volume of the cured solid casting was determined as the water displaced or

$$V = W_{dry\ solid} - W_{solid\ in\ water}$$

and the density of the cured solid casting as

$$d_{solid} = \frac{W_{dry\ solid}}{V}.$$

The cure shrinkage in percent was determined as

$$\text{Percent Cure Shrinkage} = \frac{d_{solid} - d_{liquid}}{d_{solid}} \times 100.$$

Solid casting fragments which floated were weighted with about 2 grams of copper wire and the volume of the cured solid casting was determined as

$$V = W_{dry\ solid} - W_{copper} - (W_{copper}/8.92) - W_{solid\ in\ water}$$

where 8.92 is the density of copper. The abbreviations used above have the indicated meanings: d = density; W = weight and V = volume.

In the following examples and comparative examples, a plus (+) sign before the average cure shrinkage value indicates cure expansion.

Surface Appearance: determined visually by comparing the surface of a cured glass reinforced composite of this invention with the surface of a control cured glass reinforced composite. Improved surface appearance of the cured glass reinforced composites of this invention was manifested in any of several ways such as the absence or reduction of warpage, undulations, reflected image waviness, fiber prominence or similar defects in comparison with the surface appearance of the control cured glass reinforced composites.

Viscosity: determined on a Brookfield model LVF viscometer using a #3 spindle or a #4 spidle at 60 revolutions per minute. The curable resin systems were equilibrated at 25°C before measuring the viscosity.

Example 1

Into a 25.4 × 14.0 × 0.254 cm (10 inch × 5½ inch × 1/10 inch) constant volume mold preheated to 140°C was injected a resin portion containing a mixture of 50 parts by weight of ethoxylated bisphenol A dimethacrylate, 40 parts by weight of styrene, 10 parts by weight of vinyl acetate, 43 parts by weight of BAKELITE® LP-40A which is a thermoplastic copolymer low profile additive of vinyl acetate and acrylic acid (40 weight percent) dissolved in styrene (60 weight percent) commercially available from Union Carbide Corporation, Danbury, Connecticut, 0.72 parts by weight of Zelec® UN mold release which is an organophosphate mold release commercially available for E. I. duPont de Nemours, Wilmington, Delaware, and 2.15 parts by weight of Trigonox® 29-B75 initiator which is 1,1-di-t-butylperoxy-3-3,5-trimethylcyclohexane commercially available from Noury Chemical Corporation, Burt, New York. The curable resin portion had a viscosity of 84 mPa·s (centipoise) at 25°C. The Zelec® UN mold release constituted 0.5 parts per hundred parts of the resin portion and the Trigonox® 29-B75 initiator constituted 1.5 parts per hundred parts of the resin portion. The constant volume mold was closed and evacuated for about 5 seconds prior to injection of the resin portion. The resin portion was injected into the mold at a pressure of 206.6 N/cm² (300 pounds per square inch) and this injection pressure was maintained for a dwell period of 5 to 20 seconds. After 45 to 160 seconds, the cured casting was removed from the mold. The average cure shrinkage of this resin system was determined to be 3.6 percent. The cured casting was white and opaque in appearance.

Example 2

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| Dodecene | 10 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 3.5 percent. The curable resin system had a viscosity at 25°C of 88 mPa·s (centipoise) and the cured casting was white and opaque in appearance.

Example 3

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| Diene 221 | 10 parts by weight |
| BAKELITE® LP-40A | 43 parts by weight |
| Zelec® UN mold release | 0.72 parts by weight |
| Trigonox® 29-B75 initiator | 2.15 parts by weight |

Diene 221 has the following formula:

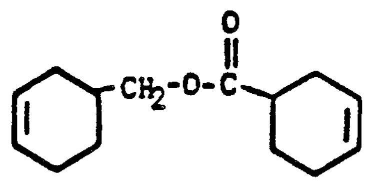

and is commercially available from Union Carbide Corporation, Danbury, Connecticut.

The average cure shrinkage of this resin system was determined to be 4.0 percent. The curable resin system had a viscosity at 25°C of 118 mPa·s (centipoise) and the cured casting was white and opaque in appearance.

Example 4

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| 1-Octene, 1-nonene, 1-decene mixture | 10 parts by weight |
| BAKELITE® LP-40A | 43 parts by weight |
| Zelec® UN mold release | 0.72 parts by weight |
| Trigonox® 29-B75 initiator | 2.15 parts by weight |

The 1-octene, 1-nonene, 1-decene mixture is commercially available from Chevron Chemical Company, San Francisco, California.

The average cure shrinkage of this resin system was determined to be 4.0 percent. The curable resin system had a viscosity at 25°C of 66 mPa·s (centipoise) and the cured casting was white and opaque in appearance.

Example 5

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| Vinyl acetate | 10 parts by weight |
| Hydroxyethyl methacrylate | 10 parts by weight |
| DVB-55 | 15 parts by weight |
| BAKELITE® LP-40A | 43 parts by weight |
| Zelec® UN mold release | 0.72 parts by weight |
| Trigonox® 29-B75 initiator | 2.15 parts by weight |

DVB-55 is a divinylbenzene mixture containing about 40 weight percent meta-divinylbenzene, 15 weight percent para-divinylbenzene, 30 weight percent meta-ethylvinylbenzene and 10 weight percent para-ethylvinylbenzene commercially available from Dow Chemical Company, Midland, Michigan.

The average cure shrinkage of this resin system was determined to be 1.3 percent. The curable resin system had a viscosity at 25°C of 129 mPa·s (centipoise) and the cured casting was white and opaque in appearance.

Example 6

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 30 parts by weight |
| Vinyl acetate | 10 parts by weight |
| BAKELITE® LP-40A | 67 parts by weight |
| Zelec® UN mold release | 0.84 parts by weight |
| Trigonox® 29-B75 initiator | 2.51 parts by weight |

The average cure shrinkage of this resin system was determined to be 1.1 percent. The curable resin system had a viscosity at 25°C of 248 mPa·s (centipoise) and the cured casting was white and opaque in appearance.

Example 7

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 30 parts by weight |
| Dodecene | 10 parts by weight |
| BAKELITE® LP-40A | 67 parts by weight |
| Zelec® UN mold release | 0.84 parts by weight |
| Trigonox® 29-B75 initiator | 2.51 parts by weight |

The average cure shrinkage of this resin system was determined to be +1.2 percent. The curable resin system had a viscosity at 25°C of 262 mPa·s (centipoise) and the cured casting was white and opaque in appearance.

Example 8

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| Vinyl acetate | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

BAKELITE® AYAF Solution is a solution of 40 weight percent low molecular weight poly(vinyl acetate) AYAF commercially available from Union Carbide Corporation, Danbury, Connecticut, and 60 weight percent styrene.

The average cure shrinkage of this resin system was determined to be 2.8 percent. The curable resin system had a viscosity at 25°C of 70 mPa·s (centipoise) and the cured casting was white and opaque in appearance.

Example 9

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| Dodecene | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 3.9 percent. The curable resin system had a viscosity at 25°C of 72 mPa·s (centipoise) and the cured casting was white and opaque in appearance.

Example 10

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 10 parts by weight |

| | |
|---|---|
| Vinyl acetate | 10 parts by weight |
| Hydroxyethyl methacrylate | 20 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 5.0 percent. The curable resin system had a viscosity at 25°C of 202 mPa·s (centipoise) and the cured casting was white and opaque in appearance.

Example 11

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 10 parts by weight |
| Dodecene | 10 parts by weight |
| Hydroxyethyl methacrylate | 20 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 7.1 percent. The curable resin system had a viscosity at 25°C of 242 mPa·s (centipoise) and the cured casting was white and opaque in appearance.

Example 12

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| Vinyl acetate | 10 parts by weight |
| Hydroxyethyl methacrylate | 15 parts by weight |
| DVB-55 | 15 parts by weight |
| LPA Solution 3500 | 43 parts by weight |
| Zelec® UN mold release | 0.72 parts by weight |
| Trigonox® 29-B75 initiator | 2.15 parts by weight |

LPA solution 3500 is a solution of 40 weight percent polystyrene SMD 3500 obtained from Union Carbide Corporation, Danbury, Connecticut, and 60 weight percent styrene.

The average cure shrinkage of this resin system was determined to be 2.8 percent. The curable resin system had a viscosity at 25°C of 192 mPa·s (centipoise) and the cured casting was white and opaque in appearance.

Example 13

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| FLEXOL® Plasticizer EP-8 | 10 parts by weight |
| BAKELITE® LP-40A | 43 parts by weight |
| Zelec® UN mold release | 0.72 parts by weight |
| Trigonox® 29-B75 initiator | 2.15 parts by weight |

FLEXOL® Plasticizer EP-8 is octyl epoxytallate having an epoxide number of about 320, a functionality of about 1.3 and commercially available from Union Carbide Corporation, Danbury, Connecticut.

The average cure shrinkage of this resin system was determined to be 1.9 percent. The curable resin system had a viscosity at 25°C of 122 mPa·s (centipoise) and the cured casting was white and opaque in appearance.

Example 14

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| FLEXOL® Plasticizer EPO | 10 parts by weight |
| BAKELITE® LP-40A | 43 parts by weight |
| Zelec® UN mold release | 0.72 parts by weight |
| Trigonox® 29-B75 initiator | 2.15 parts by weight |

FLEXOL® Plasticizer EPO is epoxidized soy bean oil having an epoxide number of about 230, a functionality of about 4.4 and commercially available from Union Carbide Corporation, Danbury, Connecticut.

The average cure shrinkage of this resin system was determined to be 1.8 percent. The curable resin system had a viscosity at 25°C of 140 mPa·s (centipoise) and the cured casting was white and opaque in appearance.

Example 15

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| FLEXOL® Plasticizer LOE | 10 parts by weight |
| BAKELITE® LP-40A | 43 parts by weight |
| Zelec® UN mold release | 0.72 parts by weight |
| Trigonox® 29-B75 initiator | 2.15 parts by weight |

FLEXOL® Plasticizer LOE is epoxidized linseed oil having an epoxide number of about 180, a functionality of about 5.6 and commercially available from Union Carbide Corporation, Danbury, Connecticut.

The average cure shrinkage of this resin system was determined to be 1.7 percent. The curable resin system had a viscosity at 25°C of 146 mPa·s (centipoise) and the cured casting was white and opaque in appearance.

Example 16

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| ERL®-4221 | 10 parts by weight |
| BAKELITE® LP-40A | 43 parts by weight |
| Zelec® UN mold release | 0.72 parts by weight |
| Trigonox® 29-B75 initiator | 2.15 parts by weight |

ERL®-4221 has the following formula:

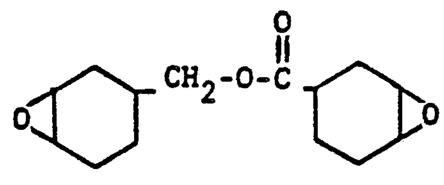

and has an epoxide number of about 131—143, a functionality of 2 and commercially available from Union Carbide Corporation, Danbury, Connecticut.

The average cure shrinkage of this resin system was determined to be 3.6 percent. The curable resin system had a viscosity at 25°C of 120 mPa·s (centipoise) and the cured casting was white and opaque in appearance.

Example 17

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| EPON®-828 | 10 parts by weight |

| | |
|---|---|
| BAKELITE® LP-40A | 43 parts by weight |
| Zelec® UN mold release | 0.72 parts by weight |
| Trigonox® 29-B75 initiator | 2.15 parts by weight |

EPON® 828 has the following formula:

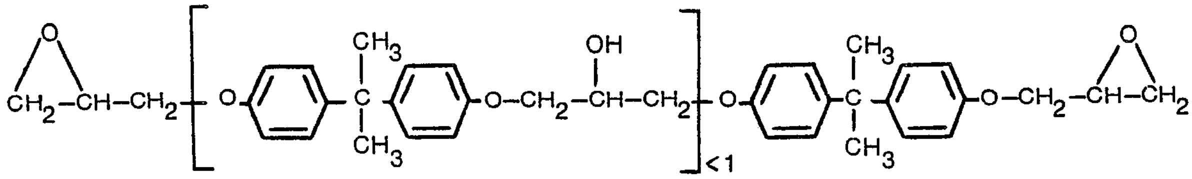

and has an epoxide number of about 185—192, a functionality of 2 and commercially available from Shell Chemical Company, Houston, Texas.

The average cure shrinkage of this resin system was determined to be 3.4 percent. The curable resin system had a viscosity at 25°C of 166 mPa·s (centipoise) and the cured casting was white and opaque in appearance.

Example 18

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 30 parts by weight |
| FLEXOL® Plasticizer EP-8 | 10 parts by weight |
| BAKELITE® LP-40A | 67 parts by weight |
| Zelec® UN mold release | 0.84 parts by weight |
| Trigonox® 29-B75 initiator | 2.51 parts by weight |

The average cure expansion of this resin system was determined to be +1.4 percent. The curable resin system had a viscosity at 25°C of 358 mPa·s (centipoise) and the cured casting was white and opaque in appearance.

Example 19

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 30 parts by weight |
| FLEXOL® Plasticizer LOE | 10 parts by weight |
| BAKELITE® LP-40A | 67 parts by weight |
| Zelec® UN mold release | 0.84 parts by weight |
| Trigonox® 29-B75 initiator | 2.51 parts by weight |

The average cure shrinkage of this resin system was determined to be 2.4 percent. The curable resin system had a viscosity at 25°C of 420 mPa·s (centipoise) and the cured casting was white and opaque in appearance.

Example 20

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| FLEXOL® Plasticizer EP-8 | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 3.8 percent. The curable resin system had a viscosity at 25°C of 104 mPa·s (centipoise) and the cured casting was white and opaque in appearance.

Example 21

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| FLEXOL® Plasticizer LOE | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure expansion of this resin system was determined to be +0.1 percent. The curable resin system had a viscosity at 25°C of 134 mPa·s (centipoise) and the cured casting was white and opaque in appearance.

Example 22

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 10 parts by weight |
| FLEXOL® Plasticizer EP-8 | 10 parts by weight |
| Hydroxyethyl methacrylate | 20 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 4.9 percent. The curable resin system had a viscosity at 25°C of 292 mPa·s (centipoise) and the cured casting was white and opaque in appearance.

Example 23

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| Linseed oil | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 6.8 percent. The curable resin system had a viscosity at 25°C of 106 mPa·s (centipoise) and the cured casting was white and opaque in appearance.

Example 24

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| 2-Ethylhexyl tallate | 10 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 5.7 percent. The curable resin system had a viscosity at 25°C of 96 mPa·s (centipoise) and the cured casting was white and opaque in appearance.

Comparative Example A

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 50 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 5.1 percent. The curable resin system had a viscosity at 25°C of 92 mPa·s (centipoise) and the cured casting was white and opaque in appearance.

Comparative Example B

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| Hydroxyethyl methacrylate | 15 parts by weight |
| DVB-55 | 20 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 3.0 percent. The curable resin system had a viscosity at 25°C of 164 mPa·s (centipoise) and the cured casting was white and opaque in appearance.

Comparative Example C

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 40 parts by weight |
| BAKELITE® LP-40A | 67 parts by weight |
| Zelec® UN mold release | 0.84 parts by weight |
| Trigonox® 29-B75 initiator | 2.51 parts by weight |

The average cure shrinkage of this resin system was determined to be 4.5 percent. The curable resin system had a viscosity at 25°C of 276 mPa·s (centipoise) and the cured casting was white and opaque in appearance.

Comparative Example D

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 50 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 7.9 percent. The curable resin system had a viscosity at 25°C of 82 mPa·s (centipoise) and the cured casting was white and opaque in appearance.

Comparative Example E

The preparation of the resin system and cured casting in Example 1 was repeated with the exception that the following ingredients were used in the following amounts:

| | |
|---|---|
| Ethoxylated bisphenol A dimethacrylate | 60 parts by weight |
| Styrene | 20 parts by weight |
| Hydroxyethyl methacrylate | 20 parts by weight |
| BAKELITE® AYAF Solution | 43 parts by weight |
| Zelec® UN mold release | 0.72 parts by weight |
| Trigonox® 29-B75 initiator | 2.15 parts by weight |

The average cure shrinkage of this resin system was determined to be 10.2 percent. The curable resin system had a viscosity at 25°C of 226 mPa·s (centipoise) and the cured casting was white and opaque in appearance.

Comparative Example F

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Hydroxyethyl methacrylate | 15 parts by weight |
| DVB-55 | 20 parts by weight |
| Styrene | 15 parts by weight |
| LPA solution 3500 | 43 parts by weight |
| Zelec® UN mold release | 0.72 parts by weight |
| Trigonox® 29-B75 initiator | 2.15 parts by weight |

The average cure shrinkage of this resin system was determined to be 7.1 percent. The curable resin system had a viscosity at 25°C of 296 mPa·s (centipoise) and the cured casting was white and opaque in appearance

The resin systems of Examples 1 through 12 containing a thermoplastic polymer low profile additive and a crosslinkable vinyl monomer having a reactivity ratio ($r_1$) with styrene of greater than 1 exhibited improved cure shrinkage control in comparison with the resin systems of Comparative Examples A through F in which a crosslinkable vinyl monomer having a reactivity ratio ($r_1$) with styrene of greater than 1 was not included as an essential ingredient.

The resin systems of Examples 13 through 24 containing a thermoplastic polymer low profile additive and an epoxy compound having at least one 1,2-epoxy group per molecule or an unsaturated fatty acid ester as an essential ingredient therein exhibited improved cure shrinkage control in comparison with the resin systems of Comparative Examples A through F in which an epoxy compound having at least one 1,2-epoxy group per molecule or unsaturated fatty acid ester was not included as an essential ingredient.

The following examples illustrate the preparation of reinforced composites from the molding compositions of this invention.

Example 25

The preparation of the resin system and molding procedure in Example 5 was repeated with the exception that approximately 45 grams of OCF M-8608 swirl glass mat commercially available from Owens-Corning Fiberglas Corporation, Toledo, Ohio, was placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm² (300 pounds per square inch) was maintained for a dwell period of 10 seconds. After 85 seconds following injection, the resulting cured glass reinforced composite containing about 36 weight percent glass was removed from the mold. The cured glass reinforced composite was white and opaque in appearance.

Example 26

The preparation of the resin system and molding procedure in Example 12 was repeated with the exception that approximately 48 grams of AKM random glass mat commercially available from PPG Industries, Inc., Pittsburgh, Pennsylvania, was placed in the 25.4 × 14.0 × 0.254 cm (10 inch × 5½ inch × 1/10 inch) constant volume mold prior to closing, evacuating and injecting the mold. The injection time was 28 seconds and the injection pressure of 206.6 N/cm² (300 pounds per square inch) was maintained for a dwell period of 15 seconds. After 75 seconds following injection, the resulting cured glass reinforced composite containing about 41 weight percent glass was removed from the mold. The cured glass reinforced composite was white and opaque in appearance.

Comparative Example G

The preparation of the resin system and molding procedure in Comparative Example B was repeated with the exception that approximately 44 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm² (300 pounds per square inch) was maintained for a dwell period of 10 seconds. After 85 seconds following injection, the resulting cured glass reinforced composite containing about 35 weight percent glass was removed from the mold. The cured glass reinforced composite was white and opaque in appearance.

Comparative Example H

The preparation of the resin system and molding procedure in Comparative Example F was repeated with the exception that approximately 46 grams of AKM random glass mat was placed in the 25.4 × 14.0 × 0.254 cm (10 inch × 5½ inch × 1/10 inch) constant volume mold prior to closing, evacuating and injecting the

mold. The injection time was 60 seconds and the injection pressure of 206.6 N/cm² (300 pounds per square inch) was maintained for a dwell period of 15 seconds. After 75 seconds following injection, the resulting cured glass reinforced composite containing about 40 weight percent glass was removed from the mold. The cured glass reinforced composite was white and opaque in appearance.

The cured glass reinforced composites of Examples 25 and 26 exhibited generally improved surface appearance in comparison with the surface appearance of the cured glass reinforced composites of Comparative Examples G and H in which at least one of the following: (i) a crosslinkable vinyl monomer having a reactivity ratio ($r_1$) with styrene of greater than one; (ii) an epoxy compound having at least one 1,2-epoxy group per molecule; and (iii) an unsaturated fatty acid ester; was not included.

Example 27

Into a 25.4 × 14.0 × 0.254 cm (10 inch × 5½ inch × ⅒ inch) constant volume mold preheated to 140°C was injected a resin portion containing a mixture of 50 parts by weight of ethoxylated bisphenol A dimethacrylate, 30 parts by weight of styrene, 20 parts by weight of a divinylbenzene mixture designated as DVB-75 containing about 54 weight percent meta-divinylbenzene, 23 weight percent para-divinylbenzene, 14 weight percent meta-ethylvinylbenzene and 6 weight percent para-ethylvinylbenzene commercially available from Dow Chemical Company, Midland, Michigan, 3.5 parts by weight of vinyl acetate, 0.9 parts by weight of ERL®-4221 which is 3,4-epoxycyclohexylmethyl 3,4-epoxycyclohexane carboxylate having the formula

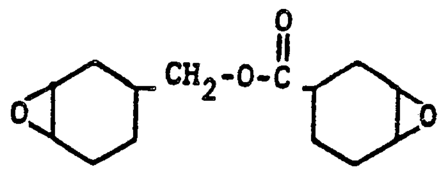

and commercially available from Union Carbide Corporation, Danbury, Connecticut, 38.4 parts by weight of BAKELITE® LP-40A which is a thermoplastic copolymer low profile additive of vinyl acetate and acrylic acid (40 weight percent) dissolved in styrene (60 weight percent) commercially available from Union Carbide Corporation, Danbury, Connecticut, 0.72 parts by weight of Zelec® UN mold release which is an organophosphate mold release commercially available for E. I. duPont de Nemours, Wilmington, Delaware, and 2.15 parts by weight of Trigonox® 29-B75 initiator which is 1,1-di-t-butylperoxy-3-3,5-trimethylcyclohexane commercially available from Noury Chemical Corporation, Burt, New York. The Zelec® UN mold release constituted 0.5 parts per hundred parts of the resin portion and the Trigonox® 29-B75 initiator constituted 1.5 parts per hundred parts of the resin portion. The constant volume mold was closed and evacuated for about 5 seconds prior to injection of the resin portion. The resin portion was injected into the mold at a pressure of 206 N/cm² (300 pounds per square inch) and this injection pressure was maintained for a dwell period of 5 to 20 seconds. After 45 to 160 seconds, the cured casting was removed from the mold. The average cure expansion of this resin system was determined to be +0.3 percent. The cured casting was white and opaque in appearance.

Example 28

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB-75 | 20 parts by weight |
| Hydroxyethyl methacrylate | 15 parts by weight |
| Vinyl acetate | 3.5 parts by weight |
| ERL®-4221 | 0.9 parts by weight |
| BAKELITE® LP-40A | 38.4 parts by weight |
| Zelec® UN mold release | 0.72 parts by weight |
| Trigonox® 29-B75 initiator | 2.15 parts by weight |

The average cure shrinkage of this resin system was determined to be 2.4 percent. The cured casting was white and opaque in appearance.

Example 29

The preparation of the resin system and cured casting of Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB-75 | 20 parts by weight |

| | |
|---|---|
| Hydroxyethyl methacrylate | 15 parts by weight |
| Vinyl acetate | 1.5 parts by weight |
| FLEXOL® Plasticizer EP-8 | 3.0 parts by weight |
| BAKELITE® LP-40A | 38.4 parts by weight |
| Zelec® UN mold release | 0.72 parts by weight |
| Trigonox® 29-B75 initiator | 2.15 parts by weight |

FLEXOL® Plasticizer EP-8 is octyl epoxytallate having an epoxide number of about 320, a functionality of about 1.3 and commercially available from Union Carbide Corporation, Danbury, Connecticut.

The average cure shrinkage of this resin system was determined to be 3.3 percent. The cured casting was white and opaque in appearance.

Example 30

The preparation of the resin system and cured casting of Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB-55 | 13 parts by weight |
| Hydroxyethyl methacrylate | 8 parts by weight |
| Vinyl acetate | 8 parts by weight |
| FLEXOL® Plasticizer EP-8 | 10 parts by weight |
| BAKELITE® LP-40A | 43 parts by weight |
| Zelec® UN mold release | 0.72 parts by weight |
| TBPB-TBPO initiator | 2.15 parts by weight |

TBPB-TBPO initiator is a mixture of tert-butyl perbenzoate and tert-butyl peroctoate in a ratio of 11/4. Tert-butyl perbenzoate and tert-butyl peroactoate are commercially available from the Lucidol Division of Pennwalt Corporation, Buffalo, New York.

DVB-5 is a divinylbenzene mixture containing about 40 weight percent meta-divinylbenzene, 15 weight percent para-divinylbenzene, 30 weight percent meta-ethylvinylbenzene and 10 weight percent para-ethylvinylbenzene commercially available from Dow Chemical Company, Midland, Michigan.

The average cure expansion of this resin system was determined to be +3.8 percent. The curable resin system had a viscosity at 25°C of 148 mPa·s (centipoise) and the cured casting was white and opaque in appearance.

Example 31

The preparation of the resin system and cured casting of Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB-55 | 13 parts by weight |
| Hydroxyethyl methacrylate | 8 parts by weight |
| Vinyl acetate | 8 parts by weight |
| Dodecene | 10 parts by weight |
| LPA Solution 210 | 43 parts by weight |
| Zelec® UN mold release | 0.72 parts by weight |
| TBPB-TBPO initiator | 2.15 parts by weight |

LPA Solution 210 is a solution of 40 weight percent polystyrene PS-210 commercially available from Shell Oil Company, Houston, Texas, and 60 weight percent styrene.

The average cure expansion of this resin system was determined to be +6.1 percent. The curable resin system had a viscosity at 25°C of 160 mPa·s (centipoise) and the cured casting was white and opaque in appearance.

Example 32

The preparation of the resin system and cured casting of Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB-55 | 13 parts by weight |
| Hydroxyethyl methacrylate | 8 parts by weight |
| Vinyl acetate | 8 parts by weight |

| | |
|---|---|
| FLEXOL® Plasticizer EP-8 | 10 parts by weight |
| LPA Solution 210 | 43 parts by weight |
| Zelec® UN mold release | 0.72 parts by weight |
| TBPB-TBPO initiator | 2.15 parts by weight |

The average cure expansion of this resin system was determined to be +5.3 percent. The curable resin system had a viscosity at 25°C of 223 mPa·s (centipoise) and the cured casting was white and opaque in appearance.

Example 33

The preparation of the resin system and cured casting in Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB—55 | 13 parts by weight |
| Hydroxyethyl methacrylate | 8 parts by weight |
| Vinyl acetate | 8 parts by weight |
| FLEXOL® Plasticizer LOE | 10 parts by weight |
| LPA Solution 210 | 43 parts by weight |
| Zelec® UN mold release | 0.72 parts by weight |
| TBPB—TBPO initiator | 2.15 parts by weight |

FLEXOL® Plasticizer LOE is epoxidized linseed oil having an epoxide number of about 180, a functionality of about 5.6 and commercially available from Union Carbide Corporation, Danbury, Connecticut.

The average cure expansion of this resin system was determined to be +4.8 percent. The curable resin system had a viscosity at 25°C of 274 mPa·s (centipoise) and the cured casting was white and opaque in appearance.

Example 34

The preparation of the resin system and cured casting in Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB—55 | 13 parts by weight |
| Hydroxyethyl methacrylate | 8 parts by weight |
| Vinyl acetate | 8 parts by weight |
| 2-Ethylhexyl tallate | 10 parts by weight |
| LPA Solution 210 | 43 parts by weight |
| Zelec® UN mold release | 0.72 parts by weight |
| TBPB—TBPO initiator | 2.15 parts by weight |

The average cure expansion of this resin system was determined to be +6.3 percent. The curable resin system had a viscosity at 25°C of 190 mPa·s (centipoise) and the cured casting was white and opaque in appearance.

Example 35

The preparation of the resin system and cured casting in Example 27 was repeated with the exception that the following ingredients were used in the following amounts:

| | |
|---|---|
| Ethoxylated bisphenol A dimethacrylate | 48 parts by weight |
| Styrene | 13 parts by weight |
| DVB—55 | 13 parts by weight |
| Hydroxyethyl methacrylate | 8 parts by weight |
| Vinyl acetate | 8 parts by weight |
| Linseed oil | 10 parts by weight |
| LPA Solution 210 | 43 parts by weight |
| Zelec® UN mold release | 0.72 parts by weight |
| TBPB—TBPO initiator | 2.15 parts by weight |

The average cure expansion of this resin system was determined to be +5.0 percent. The curable resin system had a viscosity at 25°C of 204 mPa·s (centipoise) and the cured casting was white and opaque in appearance.

Example 36

The preparation of the resin system and cured casting in Example 27 was repeated with the exception that the following ingredients were used in the following amounts:

| | |
|---|---|
| Ethoxylated bisphenol A dimethacrylate | 45.2 parts by weight |
| Styrene | 13.6 parts by weight |
| DVB—55 | 13.6 parts by weight |
| Hydroxyethyl methacrylate | 9 parts by weight |
| Vinyl acetate | 9 parts by weight |
| Linseed oil | 9.6 parts by weight |
| LPA Solution 210 | 60.3 parts by weight |
| Zelec® UN mold release | 0.84 parts by weight |
| TBPB—TBPO initiator | 2.51 parts by weight |

The average cure expansion of this resin system was determined to be +4.9 percent. The cured casting was white and opaque in appearance.

Example 37

The preparation of the resin system and cured casting in Example 27 was repeated with the exception that the following ingredients were used in the following amounts:

| | |
|---|---|
| Ethylene glycol dimethacrylate | 48 parts by weight |
| Styrene | 13 parts by weight |
| DVB—55 | 13 parts by weight |
| Hydroxyethyl methacrylate | 8 parts by weight |
| Vinyl acetate | 8 parts by weight |
| Linseed oil | 10 parts by weight |

| | |
|---|---|
| LPA Solution 210 | 43 parts by weight |
| Zelec® UN mold release | 0.72 parts by weight |
| TBPB—TBPO initiator | 2.15 parts by weight |

The average cure expansion of this resin system was determined to be +12.0 percent. The cured casting was white and opaque in appearance.

Comparative Example I

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 30 parts by weight |
| DVB—75 | 20 parts by weight |
| BAKELITE® LP—40A | 43 parts by weight |
| Zelec® UN mold release | 0.72 parts by weight |
| Trigonox® 29—B75 initiator | 2.15 parts by weight |

The average cure shrinkage of this resin system was determined to be 1.1 percent. The curable resin system had a viscosity at 25°C of 105 mPa·s (centipoise) and the cured casting was white and opaque in appearance.

Comparative Example J

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB—75 | 20 parts by weight |
| Hydroxyethyl methacrylate | 15 parts by weight |
| BAKELITE® LP—40A | 43 parts by weight |
| Zelec® UN mold release | 0.72 parts by weight |
| Trigonox® 29—B75 initiator | 2.15 parts by weight |

The average cure shrinkage of this resin system was determined to be 4.4 percent. The curable resin system had a viscosity at 25°C of 157 mPa·s (centipoise) and the cured casting was white and opaque in appearance.

Example 38

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP—40A | 43 parts by weight |

| | |
|---|---|
| Zelec® UN mold release | 0.72 parts by weight |
| TBPB-TBPO initiator | 2.15 parts by weight |

The average cure expansion of this resin system was determined to be +2.7 percent. The curable resin system had a viscosity at 25°C of 117 mPa·s (centipoise) and the cured casting was white and opaque in appearance.

Example 39

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB—55 | 15 parts by weight |
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| TBPB—TBPO initiator | 2.15 parts by weight |

The average cure shrinkage of this resin system was determined to be 0.7 percent. The curable resin system had a viscosity at 25°C of 438 mPa·s (centipoise) and the cured casting was white and opaque in appearance.

Example 40

The preparation of the resin system and cured casting in Example 27 was repeated with the exception that the following ingredients were used in the following amounts:

| | |
|---|---|
| Ethoxylated bisphenol A dimethacrylate | 50 parts by weight |
| Styrene | 15 parts by weight |
| DVB—55 | 15 parts by weight |
| Hydroxyethyl methacrylate | 10 parts by weight |
| Vinyl acetate | 10 parts by weight |
| LPA Solution 210 | 67 parts by weight |
| Zelec® UN mold release | 0.84 parts by weight |
| TBPB—TBPO initiator | 2.51 parts by weight |

The average cure expansion of this resin system was determined to be +2.3 percent. The cured casting was white and opaque in appearance.

Example 41

The preparation of the resin system and cured casting in Example 27 was repeated with the exception that the following ingredients were used in the following amounts:

| | |
|---|---|
| Ethylene glycol dimethacrylate | 50 parts by weight |
| Styrene | 15 parts by weight |
| DVB—55 | 15 parts by weight |

| | |
|---|---|
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| TBPB—TBPO initiator | 2.15 parts by weight |

The average cure expansion of this resin system was determined to be +6.7 percent. The cured casting was white and opaque in appearance.

The resin systems of Examples 27 through 41 containing a thermoplastic polymer low profile additive, vinyl acetate monomer and at least one of the following: (i) a second crosslinkable vinyl monomer having a reactivity ratio ($r_1$) with styrene of greater than one; (ii) an epoxy compound having at least one 1,2-epoxy group per molecule; and (iii) an unsaturated fatty acid ester; as an essential combination of ingredients therein exhibited improved cure shrinkage control in comparison with the resin systems of Comparative Examples I and J in which a vinyl acetate monomer and at least one of the following: (i) a second crosslinkable vinyl monomer having a reactivity ratio ($r_1$) with styrene of greater than one; (ii) an epoxy compound having at least one 1,2-epoxy group per molecule; and (iii) an unsaturated fatty acid ester; were not included as an essential combination of ingredients.

The following examples illustrate the preparation of reinforced composites from the molding compositions of this invention.

Example 42

The preparation of the resin system and molding procedure in Example 30 was repeated with the exception that approximately 43 grams of OCF M—8608 swirl glass mat commercially available from Owens-Corning Fiberglas Corporation, Toledo, Ohio, was placed on the 25.4 × 14.0 × 0.254 cm (10 inch × 5½ inch × 1/10 inch) constant volume mold prior to closing, evacuating and injecting the mold. The injection time was 5 seconds and the injection pressure of 206.6 N/cm$^2$ (300 pounds per square inch) was maintained for a dwell period of 5 seconds. After 80 seconds following injection, the resulting cured glass reinforced composite containing about 36 weight percent glass was removed from the mold. The cured glass reinforced composite was white and opaque in appearance.

Example 43

The preparation of the resin system and molding procedure in Example 30 was repeated with the exception that approximately 44 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 80 seconds following injection, the resulting cured glass reinforced composite containing about 37 weight percent glass was removed from the mold. The cured glass reinforced composite was white and opaque in appearance.

Example 44

The preparation of the resin system and molding procedure in Example 30 was repeated with the exception that 95 parts by weight of Camel Wite® was added to the resin system and that approximately 43 grams of OCF M—8608 swirl glass mat was placed in the 25.4 × 14.0 × 0.254 cm (10 inch × 5½ inch × 1/10 inch) constant volume mold prior to closing, evacuating and injecting the mold. Camel Wite® is a finely divided calcium carbonate filler having an average diameter size of 2.5 μm and commercially available from H. T. Campbell. The injection time was 6 seconds and the injection pressure of 206.6 N/cm$^2$ (300 pounds per square inch) was maintained for a dwell period of 5 seconds. After 80 seconds following injection, the resulting cured glass reinforced composite containing about 30 weight percent glass was removed from the mold. The cured glass reinforced composite was white and opaque in appearance.

Example 45

The preparation of the resin system and molding procedure in Example 30 was repeated with the exception that 95 parts by weight of Camel Wite® was added to the resin system and that approximately 47 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm$^2$ (300 pounds per square inch) was maintained for a dwell period of 5 seconds. After 80 seconds following injection, the resulting cured glass reinforced composite containing about 32 weight percent glass was removed from the mold. The cured glass reinforced composite was white and opaque in appearance.

Example 46

The preparation of the resin system and molding procedure in Example 31 was repeated with the exception that approximately 48 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 41 weight percent glass was removed from the mold. The cured glass reinforced composite was white and opaque in appearance.

Example 47

The preparation of the resin system and molding procedure in Example 31 was repeated with the exception that approximately 48 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 5 seconds and the injection pressure of 206.6 N/cm$^2$ (300 pounds per square inch) was maintained for a dwell period of 5 seconds. After 125 seconds following injection, the resulting cured glass reinforced composite containing about 41 weight percent glass was removed from the mold. The cured glass reinforced composite was white and opaque in appearance.

Example 48

The preparation of the resin system and molding procedure in Example 31 was repeated with the exception that 95 parts by weight of Camel Wite® was added to the resin system and that approximately 44 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 80 seconds following injection, the resulting cured glass reinforced composite containing about 31 weight percent glass was removed from the mold. The cured glass reinforced composite was white and opaque in appearance.

Example 49

The preparation of the resin system and molding procedure in Example 31 was repeated with the exception that 95 parts by weight of Camel Wite® was added to the resin system and that approximately 46 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 80 seconds following injection, the resulting cured glass reinforced composite containing about 32 weight percent glass was removed from the mold. The cured glass reinforced composite was white and opaque in appearance.

Example 50

The preparation of the resin system and molding procedure in Example 32 was repeated with the exception that approximately 43 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 36 weight percent glass was removed from the mold. The cured glass reinforced composite was white and opaque in appearance.

Example 51

The preparation of the resin system and molding procedure in Example 32 was repeated with the exception that approximately 47 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 39 weight percent glass was removed from the mold. The cured glass reinforced composite was white and opaque in appearance.

Example 52

The preparation of the resin system and molding procedure in Example 32 was repeated with the exception that 95 parts by weight of Camel Wite® was added to the resin system and that approximately 43 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell

period of 5 seconds. After 80 seconds following injection, the resulting cured glass reinforced composite containing about 28 weight percent glass was removed from the mold. The cured glass reinforced composite was white and opaque in appearance.

Example 53

The preparation of the resin system and molding procedure in Example 32 was repeated with the exception that 95 parts by weight of Camel Wite® was added to the resin system and that approximately 43 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 8 seconds and the injection pressure of 206.6 N/cm$^2$ (300 pounds per square inch) was maintained for a dwell period of 5 seconds. After 80 seconds following injection, the resulting cured glass reinforced composite containing about 29 weight percent glass was removed from the mold. The cured glass reinforced composite was white and opaque in appearance.

Example 54

The preparation of the resin system and molding procedure in Example 33 was repeated with the exception that approximately 49 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 41 weight percent glass was removed from the mold. The cured glass reinforced composite was white and opaque in appearance.

Example 55

The preparation of the resin system and molding procedure in Example 33 was repeated with the exception that approximately 50 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 40 weight percent glass was removed from the mold. The cured glass reinforced composite was white and opaque in appearance.

Example 56

The preparation of the resin system and molding procedure in Example 33 was repeated with the exception that 95 parts by weight of Camel Wite® was added to the resin system and that approximately 43 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 8 seconds and the injection pressure of 206.6 N/cm$^2$ (300 pounds per square inch) was maintained for a dwell period of 5 seconds. After 80 seconds following injection, the resulting cured glass reinforced composite containing about 31 weight percent glass was removed from the mold. The cured glass reinforced composite was white and opaque in appearance.

Example 57

The preparation of the resin system and molding procedure in Example 33 was repeated with the exception that 95 parts by weight of Camel Wite® was added to the resin system and that approximately 45 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm$^2$ (300 pounds per square inch) was maintained for a dwell period of 5 seconds. After 80 seconds following injection, the resulting cured glass reinforced composite containing about 29 weight percent glass was removed from the mold. The cured glass reinforced composite was white and opaque in appearance.

Example 58

The preparation of the resin system and molding procedure in Example 34 was repeated with the exception that approximately 48 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm$^2$ (300 pounds per square inch) was maintained for a dwell period of 5 seconds. After 110 seconds following injection, the resulting cured glass reinforced composite containing about 40 weight percent glass was removed from the mold. The cured glass reinforced composite was white and opaque in appearance.

Example 59

The preparation of the resin system and molding procedure in Example 34 was repeated with the exception that approximately 44 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 110 seconds following injection, the resulting cured glass reinforced composite containing about 38 weight percent glass was removed from the mold. The cured glass reinforced composite was white and opaque in appearance.

Example 60

The preparation of the resin system and molding procedure in Example 34 was repeated with the exception that 95 parts by weight of Camel Wite® was added to the resin system and that approximately 51 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 95 seconds following injection, the resulting cured glass reinforced composite containing about 34 weight percent glass was removed from the mold. The cured glass reinforced composite was white and opaque in appearance.

Example 61

The preparation of the resin system and molding procedure in Example 34 was repeated with the exception that 95 parts by weight of Camel Wite® was added to the resin system and that approximately 45 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 10 seconds and the injection pressure of 206.6 $N/cm^2$ (300 pounds per square inch) was maintained for a dwell period of 5 seconds. After 95 seconds following injection, the resulting cured glass reinforced composite containing about 30 weight percent glass was removed from the mold. The cured glass reinforced composite was white and opaque in appearance.

Example 62

The preparation of the resin system and molding procedure in Example 35 was repeated with the exception that approximately 49 grams of OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 110 seconds following injection, the resulting cured glass reinforced composite containing about 40 weight percent glass was removed from the mold. The cured glass reinforced composite was white and opaque in appearance.

Example 63

The preparation of the resin system and molding procedure in Example 35 was repeated with the exception that approximately 48 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 110 seconds following injection, the resulting cured glass reinforced composite containing about 40 weight percent glass was removed from the mold. The cured glass reinforced composite was white and opaque in appearance.

Example 64

The preparation of the resin system and molding procedure in Example 35 was repeated with the exception that 95 parts by weight of Camel Wite® was added to the resin system and that approximately 44 grams of OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 8 seconds and the injection pressure of 206.6 $N/cm^2$ (300 pounds per square inch) was maintained for a dwell period of 5 seconds. After 80 seconds following injection, the resulting cured glass reinforced composite containing about 29 weight percent glass was removed from the mold. The cured glass reinforced composite was white and opaque in appearance.

Example 65

The preparation of the resin system and molding procedure in Example 36 was repeated with the exception that approximately 47 grams of OCF M—8608 swirl glass mat with veil glass mats positioned on both the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The

injection time was 2 seconds and the injection pressure of 206.6 $N/cm^2$ (300 pounds per square inch) was maintained for a dwell period of 5 seconds. After 80 seconds following injection, the resulting cured glass reinforced composite containing about 40 weight percent glass was removed from the mold. The cured glass reinforced composite was white and opaque in appearance.

Example 66

The preparation of the resin system and molding procedure in Example 36 was repeated with the exception that 95 parts by weight of Camel Wite® was added to the resin system and that approximately 50 grams of OCF M—8608 swirl glass mat with two veil glass mats positioned on both the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 4 seconds and the injection pressure of 206.6 $N/cm^2$ (300 pounds per square inch) was maintained for a dwell period of 5 seconds. After 80 seconds following injection, the resulting cured glass reinforced composite containing about 34 weight percent glass was removed from the mold. The cured glass reinforced composite was white and opaque in appearance.

Example 67

The preparation of the resin system and molding procedure in Example 37 was repeated with the exception that approximately 43 grams of OCF M—8608 swirl glass mat with veil glass mats positioned on the top and bottom of the OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 5 seconds and the injection pressure of 206.6 $N/cm^2$ (300 pounds per square inch) was maintained for a dwell period of 5 seconds. After 65 seconds following injection, the resulting cured glass reinforced composite containing about 39 weight percent glass was removed from the mold. The cured glass reinforced composite was white and opaque in appearance.

Example 68

The preparation of the resin system and molding procedure in Example 37 was repeated with the exception that 95 parts by weight of Camel Wite® was added to the resin system and that approximately 46 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 65 seconds following injection, the resulting cured glass reinforced composite containing about 34 weight percent glass was removed from the mold. The cured glass reinforced composite was white and opaque in appearance.

Example 69

The preparation of the resin system and molding procedure in Example 38 was repeated with the exception that approximately 44 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 5 seconds and the injection pressure of 206.6 $N/cm^2$ (300 pounds per square inch) was maintained for a dwell period of 5 seconds. After 80 seconds following injection, the resulting cured glass reinforced composite containing about 37 weight percent glass was removed from the mold. The cured glass reinforced composite was white and opaque in appearance.

Example 70

The preparation of the resin system and molding procedure in Example 38 was repeated with the exception that approximately 46 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 5 seconds and the injection pressure of 206.6 $N/cm^2$ (300 pounds per square inch) was maintained for a dwell period of 5 seconds. After 80 seconds following injection, the resulting cured glass reinforced composite containing about 39 weight percent glass was removed from the mold. The cured glass reinforced composite was white and opaque in appearance.

Example 71

The preparation of the resin system and molding procedure in Example 38 was repeated with the exception that 95 parts by weight of Camel Wite® was added to the resin system and that approximately 46 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 $N/cm^2$ (300 pounds per square inch) was maintained for a dwell period of 5 seconds. After 80 seconds following injection, the resulting cured glass reinforced composite containing about 32 weight percent glass was removed from the mold. The cured glass reinforced composite was white and opaque in appearance.

Example 72

The preparation of the resin system and molding procedure in Example 38 was repeated with the exception that 95 parts by weight of Camel Wite® was added to the resin system and that approximately 45 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 9 seconds and the injection pressure of 206.6 N/cm² (300 pounds per square inch) was maintained for a dwell period of 5 seconds. After 80 seconds following injection, the resulting cured glass reinforced composite containing about 30 weight percent glass was removed from the mold. The cured glass reinforced composite was white and opaque in appearance.

Example 73

The preparation of the resin system and molding procedure in Example 39 was repeated with the exception that approximately 49 grams of OCF M—8608 swirl glass mat was placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm² (300 pounds per square inch) was maintained for a dwell period of 5 seconds. After 110 seconds following injection, the resulting cured glass reinforced composite containing about 41 weight percent glass was removed from the mold. The cured glass reinforced composite was white and opaque in appearance.

Example 74

The preparation of the resin system and molding procedure in Example 39 was repeated with the exception that approximately 48 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 6 seconds and the injection pressure of 206.6 N/cm² (300 pounds per square inch) was maintained for a dwell period of 5 seconds. After 110 seconds following injection, the resulting cured glass reinforced composite containing about 40 weight percent glass was removed from the mold. The cured glass reinforced composite was white and opaque in appearance.

Example 75

The preparation of the resin system and molding procedure in Example 39 was repeated with the exception that 95 parts by weight of Camel Wite® was added to the resin system and that approximately 49 grams of OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 7 seconds and the injection pressure of 206.6 N/cm² (300 pounds per square inch) was maintained for a dwell period of 5 seconds. After 80 seconds following injection, the resulting cured glass reinforced composite containing about 33 weight percent glass was removed from the mold. The cured glass reinforced composite was white and opaque in appearance.

Example 76

The preparation of the resin system and molding procedure in Example 39 was repeated with the exception that 95 parts by weight of Camel Wite® was added to the resin system and that approximately 45 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 8 seconds and the injection pressure of 206.6 N/cm² (300 pounds per square inch) was maintained for a dwell period of 5 seconds. After 80 seconds following injection, the resulting cured glass reinforced composite was removed from the mold. The cured glass reinforced composite was white and opaque in appearance.

Example 77

The preparation of the resin system and molding procedure in Example 40 was repeated with the exception that approximately 44 grams of OCF M—8608 swirl glass mat with two veil glass mats positioned on both the top and bottom of the OCF M—8608 swirl glass mat were placed in the 25.4 × 14.0 × 0.254 cm (10 inch × 5½ inch × 1/10 inch) constant volume mold prior to closing, evacuating and injecting the mold. The injection time was 3 seconds and the injection pressure of 206.6 N/cm² (300 pounds per square inch) was maintained for a dwell period of 5 seconds. After 80 seconds following injection, the resulting cured glass reinforced composite containing about 38 weight percent glass was removed from the mold. The cured glass reinforced composite was white and opaque in appearance.

Example 78

The preparation of the resin system and molding procedure in Example 40 was repeated with the exception that 95 parts by weight of Camel Wite® was added to the resin system and that approximately 47 grams of OCF M—8608 swirl glass mat with two veil glass mats positioned on both the top and bottom of the OCF M—8608 swirl glass mat were placed in the 25.4 × 14.0 × 0.254 cm (10 inch × 5½ inch × 1/10 inch)

constant volume mold prior to closing, evacuating and injecting the mold. The injection time was 3 seconds and the injection pressure of 206.6 N/cm² (300 pounds per square inch) was maintained for a dwell period of 5 seconds. After 80 seconds following injection, the resulting cured glass reinforced composite containing about 33 weight percent glass was removed from the mold. The cured glass reinforced composite was white and opaque in appearance.

Example 79

The preparation of the resin system and molding procedure in Example 41 was repeated with the exception that approximately 43 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × ⅒ inch) constant volume mold prior to closing, evacuating and injecting the mold. The injection time was 5 seconds and the injection pressure of 206.6 N/cm² (300 pounds per square inch) was maintained for a dwell period of 5 seconds. After 65 seconds following injection, the resulting cured glass reinforced composite containing about 37 weight percent glass was removed from the mold. The cured glass reinforced composite was white and opaque in appearance.

Example 80

The preparation of the resin system and molding procedure in Example 41 was repeated with the exception that 95 parts by weight of Camel Wite® was added to the resin system and that approximately 47 grams of OCF M—8608 swirl glass mat with veil glass mats positioned on the top and bottom of the OCF M—8608 swirl glass mat were placed in the 25.4 × 14.0 × 0.254 cm (10 inch × 5½ inch × ⅒ inch) constant volume mold prior to closing, evacuating and injecting the mold. The injection time was 5 seconds and the injection pressure of 206.6 N/cm² (300 pounds per square inch) was maintained for a dwell period of 5 seconds. After 65 seconds following injection, the resulting cured glass reinforced composite containing about 34 weight percent glass was removed from the mold. The cured glass reinforced composite was white and opaque in appearance.

**Claims**

1. A curable molding composition comprising a mixture of:

(a) a poly(acrylate) characterized by the following empirical formula:

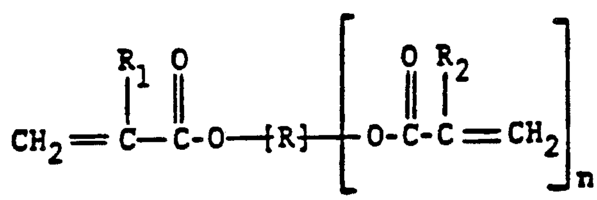

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;

(b) an ethylenically unsaturated monomer which is soluble in and copolymerizable with (a);

(c) at least one of the following:

(i) one or more crosslinkable vinyl monomers having a reactivity ratio ($r_1$) with styrene of greater than one;

(ii) an epoxy compound having at least one 1,2-epoxy group per molecule; and

(iii) an unsaturated fatty acid ester; and

(d) a thermoplastic polymer low profile additive which is soluble in the mixture of (a), (b) and (c).

2. A curable molding composition as defined in claim 1 wherein the poly(acrylate) is selected from one or more of the following: ethoxylated bisphenol A dimethacrylate, ethoxylated bisphenol A diacrylate, propoxylated bisphenol A dimethacrylate, propoxylated bisphenol A diacrylate tetraethylene glycol dimethacrylate, diethylene glycol dimethacrylate, tetraethylene glycol diacrylate, diethylene glycol diacrylate, ethylene glycol dimethacrylate, trimethylolpropane triacrylate, and trimethylolpropane trimethacrylate.

3. A curable molding composition as defined in claims 1 or 2 wherein the poly(acrylate) is blended with at least one thermosettable organic material containing two or more polymerizable carbon-carbon double bonds.

4. A curable molding composition as defined in any of claims 1 to 3 wherein the poly(acrylate) is present in an amount of from 10 to 75 weight percent.

5. A curable molding composition as defined in claim 1 wherein the ethylenically unsaturated monomer comprises styrene or a mixture of styrene and 2-hydroxyethyl methacrylate.

6. A curable molding composition as defined in any of claims 1 to 5 wherein the ethylenically unsaturated monomer is present in an amount of from 10 to 75 weight percent.

7. A curable molding composition as defined in claim 1 wherein the crosslinkable vinyl monomer

having a reactivity ratio ($r_1$) with styrene of greater than one is selected from vinyl acetate, vinyl stearate, vinyl norbornene, dicyclopentadiene, butyl vinyl ether, diallyl phthalate, dodecene, 1-octene, 1-nonene, 1-decene, alpha-olefin mixtures, a compound of the following formula:

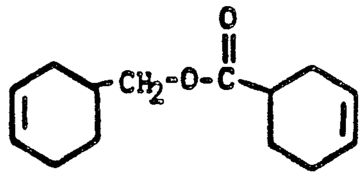

and mixtures thereof.

8. A curable molding composition as defined in any of claims 1 to 7 wherein the crosslinkable vinyl monomer having a reactivity ratio ($r_1$) with styrene of greater than one is present in an amount of from 1 to 30 weight percent.

9. A curable molding composition as defined in any of claims 1 to 8 wherein the epoxy compound having at least one 1,2-epoxy group per molecule is selected from

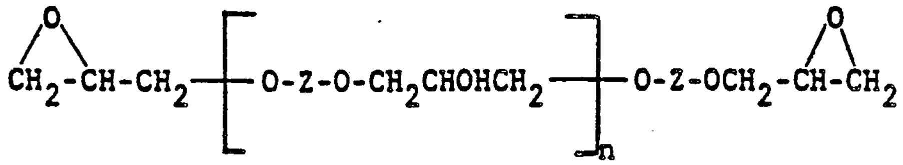

wherein n is an integer representing the number of repeating units and has a value of from 0 to 10 and z is an arylene radical having from 6 to 20 carbon atoms; 3,4-epoxycyclohexylmethyl 3,4-epoxycyclohexane carboxylate having the formula:

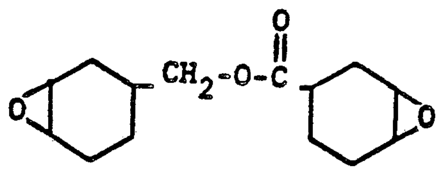

bis(2,3-epoxycyclopentyl)ether having the formula:

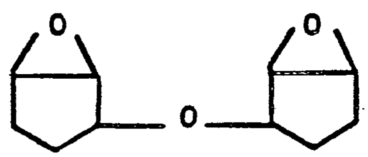

vinyl cyclohexene dioxide having the formula:

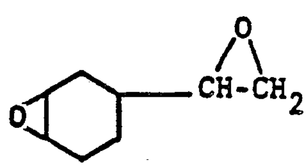

2-(3,4-epoxycyclohexyl-5,5-spiro)-(3,4 epoxy) cyclohexane-m-dioxane having the formula:

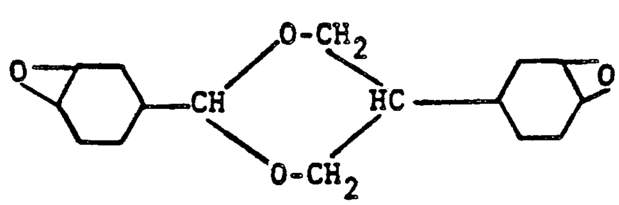

cyclohexylmethyl epoxycyclohexane carboxylate having the formula:

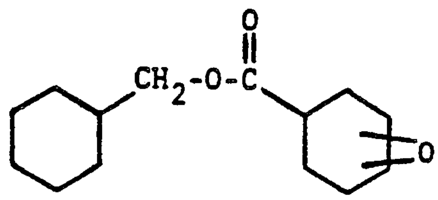

3-(3,4-epoxycyclohexane)-8,9-epoxy-2,4-dioxaspiro[5.5]-undecane having the formula:

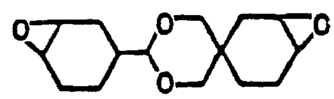

bis(3,4-epoxy-cyclohexylmethyl) adipate having the formula:

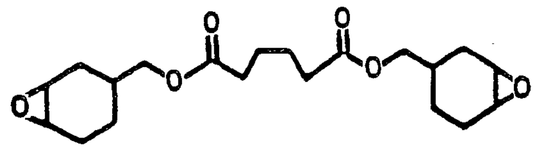

epoxidized pentaerythritol tetratallate; epoxidized soy bean oil; octyl epoxytallate; epoxidized linseed oil; and mixtures thereof.

10. A curable molding composition as defined in any of claims 1 to 9 wherein the epoxy compound having at least one 1,2-epoxy group per molecule is present in an amount of from 1 to 30 weight percent.

11. A curable molding composition as defined in any of claims 1 to 10 wherein the unsaturated fatty acid ester is selected from tall oil, soybean oil, linseed oil, 2-ethylhexyl tallate, glycerol tallate, pentaerythritol tallate, glycerol oleate and mixtures thereof.

12. A curable molding composition as defined in any of claims 1 to 11 wherein the unsaturated fatty acid ester is present in an amount of from 1 to 30 weight percent.

13. A curable molding composition as defined in any of claims 1 to 12 wherein the thermoplastic polymer low profile additive is selected from thermoplastic polymers of vinyl acetate, saturated polyesters, polyalkyl acrylates or methacrylates, polystyrene or mixtures or copolymers thereof.

14. A curable molding composition as defined in any of claims 1 to 12 wherein the thermoplastic polymer low profile additive comprises a carboxylated vinyl acetate polymer or a vinyl acetate homopolymer or copolymer of vinyl acetate and an ethylenically unsaturated carboxylic acid selected from acrylic acid, methacrylic acid, maleic acid, fumaric acid, and itaconic acid.

15. A curable molding composition as defined in any of claims 1 to 14 wherein the thermoplastic polymer low profile additive is present in an amount of from 5 to 25 weight percent.

16. A curable molding composition as defined in any of claims 1 to 15 further comprising a free radical initiator or a mixture of initiators.

17. A curable molding composition as defined in any of claims 1 to 16 further comprising unsubstituted or substituted meta- and/or para-divinylbenzene, preferably unsubstituted meta-divinylbenzene, unsubstituted para-divinylbenzene or mixtures thereof or mixtures thereof containing ethylvinylbenzene.

18. A curable molding composition as defined in claim 17 wherein the unsubstituted or substituted meta- and/or para-divinylbenzene is present in an amount of from 2 to 75 weight percent.

19. A curable molding composition as defined in any of claims 1 to 18 further comprising a filler selected from calcium carbonate, clay, hydrated alumina, silica and mixtures thereof.

20. A molded article prepared from any of the compositions of claims 1 to 19.

21. A molded article as defined in claim 20 which contains from about 10 to about 75 weight percent of one or more fibers having a melting point or a glass transition temperature above about 130°C, preferably fibers selected from fiberglass, carbon fibers, aromatic polyamide fibers, and mixtures thereof.

22. An improved process for producing a fiber reinforced article which comprises the steps of (a) providing in a heatable matched metal die mold, a bonded web of one or more of said fibers having a melting point or a glass transition temperature above about 130°C, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom, wherein the improvement comprises a resin composition

comprising a mixture of:

(i) a poly(acrylate) characterized by the following empirical formula:

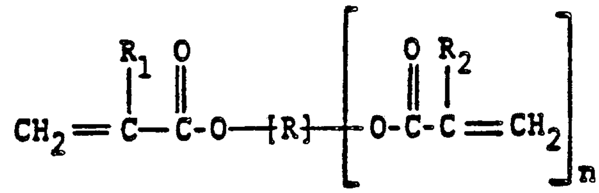

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;

(ii) an ethylenically unsaturated monomer which is soluble in and copolymerizable with (i);

(iii) at least one of the following;

(1) a crosslinkable vinyl monomer having a reactivity ratio ($r_1$) with styrene of greater than one;

(2) an epoxy compound having at least one 1,2-epoxy group per molecule; and

(3) an unsaturated fatty acid ester; and

(iv) a thermoplastic polymer low profile additive which is soluble in the mixture of (i), (ii) and (iii).

23. A curable molding composition comprising a mixture of:

(a) a poly(acrylate) characterized by the following empirical formula:

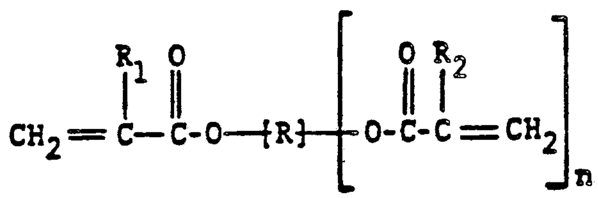

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;

(b) an ethylenically unsaturated monomer which is soluble in and copolymerizable with (a);

(c) a crosslinkable vinyl monomer having a reactivity ratio ($r_1$) with styrene of greater than one and at least one of the following:

(i) a second crosslinkable vinyl monomer having a reactivity ratio ($r_1$) with styrene of greater than one;

(ii) an epoxy compound having at least one 1,2-epoxy group per molecule; and

(iii) an unsaturated fatty acid ester; and

(d) a thermoplastic polymer low profile additive which is soluble in the mixture of (a), (b) and (c).

24. A curable molding composition as defined in claim 23 wherein the crosslinkable vinyl monomer having a reactivity ratio ($r_1$) with styrene of greater than one comprises vinyl acetate.

25. A curable molding composition as defined in claim 23 or 24 wherein the second crosslinkable vinyl monomer having a reactivity ratio ($r_1$) with styrene of greater than one is selected from vinyl stearate, vinyl norbornene, dicyclopentadiene, butyl vinyl ether, diallyl phthalate, dodecene, 1-octene, 1-nonene, 1-decene, alpha olefin mixtures, a compound of the following formula:

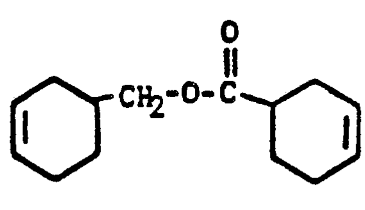

and mixtures thereof.

26. An improved process for producing a fiber reinforced article which comprises the steps of (a) providing in a heatable matched metal die mold, a bonded web of one or more of said fibers having a melting point or a glass transition temperature above about 130°C, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing

the cured thermoset article therefrom, wherein the improvement comprises a resin composition comprising a mixture of:

(i) a poly(acrylate) characterized by the following empirical formula:

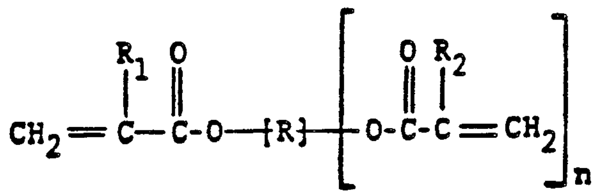

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;

(ii) an ethylenically unsaturated monomer which is soluble in and copolymerizable with (i);

(iii) a crosslinkable vinyl monomer having a reactivity ratio ($r_1$) with styrene of greater than one and at least one of the following:

(1) a second crosslinkable vinyl monomer having a reactivity ratio ($r_1$) with styrene of greater than one;

(2) an epoxy compound having at least one 1,2-epoxy group per molecule; and

(3) an unsaturated fatty acid ester; and

(iv) a thermoplastic polymer low profile additive which is soluble in the mixture of (i), (ii) and (iii).

27. The fiber reinforced article prepared from the process of claim 22 or 26.

**Patentansprüche**

1. Härtbare Formzusammensetzung, die eine Mischung aus

(a) einem Poly(acrylat), das durch die folgende empirische Formel

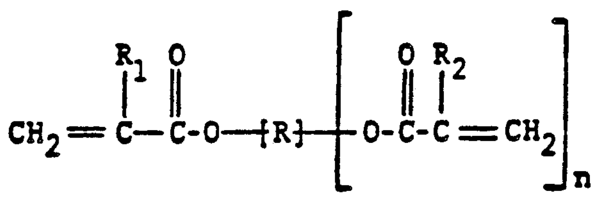

gekennzeichnet ist, worin R der hydroxylgruppenfreie Rest eines organischen mehrwertigen Alkohols ist, der an unterschiedliche Kohlenstoffatome gebundene, alkoholische Hydroxylgruppen enthielt, $R_1$ und $R_2$ unabhängig Wasserstoff oder Methyl bedeuten und n = 1 bis 3 ist,

(b) einem ethylenisch ungesättigten Monomer, das in (a) löslich und mit diesem copolymerisierbar ist,

(c) mindestens einem der folgenden Materialien:

(i) einem oder mehreren vernetzbaren Vinylmonomeren mit einem Reaktivitätsverhältnis ($r_1$) mit Styrol größer als 1,

(ii) einer Epoxyverbindung mit mindestens einer 1,2-Epoxygruppe pro Molekül und

(iii) einem ungesättigten Fettsäureester und

(d) einem Zusatz eines thermoplastischen, ausgeprägte Maßstabilität verleihenden Polymers, der in der Mischung aus (a), (b) und (c) löslich ist, umfaßt.

2. Härtbare Formzusammensetzung nach Anspruch 1, worin das Poly(acrylat) ausgewählt ist aus einem oder mehreren der folgenden Materialien: ethoxyliertes Bisphenol-A-dimethacrylat, ethoxyliertes Bisphenol-A-diacrylat, propoxyliertes Bisphenol-A-dimethacrylat, propoxyliertes Bisphenol-A-diacrylat, Tetraethylenglykoldimethacrylat, Diethylenglykoldimethacrylat, Tetraethylenglykoldiacrylat, Diethylenglykoldiacrylat, Ethylenglykoldimethacrylat, Trimethylolpropantriacrylat und Trimethylolpropantrimethacrylat.

3. Härtbare Formzusammensetzung nach Anspruch 1 oder 2, worin das Poly(acrylat) mit mindestens einem hitzehärtbaren organischen Material, das zwei oder mehrere polymerisierbare Kohlenstoff-Kohlenstoff-Doppelbindungen enthält, gemischt ist.

4. Härtbare Formzusammensetzung nach irgendeinem der Ansprüche 1 bis 3, worin das Poly(acrylat) in einer Menge von 10 bis 75 Gew.-% anwesend ist.

5. Härtbare Formzusammensetzung nach Anspruch 1, worin das ethylenisch ungesättigte Monomer Styrol oder eine Mischung aus Styrol und 2-Hydroxyethylmethacrylat umfaßt.

6. Härtbare Formzusammensetzung nach irgendeinem der Ansprüche 1 bis 5, worin das ethylenisch ungesättigte Monomere in einer Menge von 10 bis 75 Gew.-% anwesend ist.

7. Härtbare Formzusammensetzung nach Anspruch 1, worin das vernetzbare Vinylmonomer mit einem

Reaktivitätsverhältnis ($r_1$) mit Styrol größer als 1 ausgewählt ist aus Vinylacetat, Vinylstearat, Vinylnorbornen, Dicyclopentadien, Butylvinylether, Diallylphthalat, Dodecen, 1-Octen, 1-Nonen, 1-Decen, α-Olefinmischungen, einer Verbindung der folgenden Formel

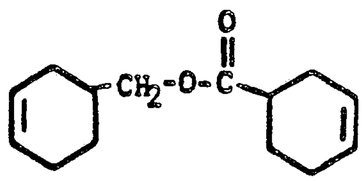

und Mischungen derselben.

8. Härtbare Formzusammensetzung nach irgendeinem der Ansprüche 1 bis 7, worin das vernetzbare Vinylmonomer mit einem Reaktivitätsverhältnis ($r_1$) mit Styrol größer als 1 in einer Menge von 1 bis 30 Gew.-% anwesend ist.

9. Härtbare Formzusammensetzung nach irgendeinem der Ansprüche 1 bis 8, worin die Epoxyverbindung mit mindestens einer 1,2-Epoxygruppe pro Molekül ausgewählt ist aus

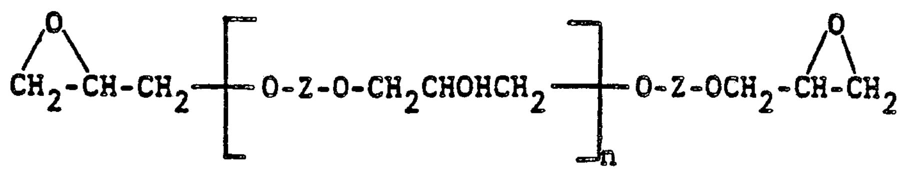

worin n eine ganze Zahl ist, die die Anzahl der wiederkehrenden Einheiten darstellt und einen Wert von 0 bis 10 hat und z ein Arylenrest mit 6 bis 20 Kohlenstoffatomen ist; 3,4-Epoxycyclohexylmethyl-3,4-epoxycyclohexancarboxylat mit der Formel

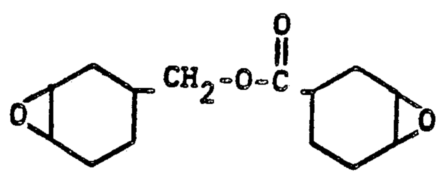

Bis(2,3-epoxycyclopentyl)ether der Formel

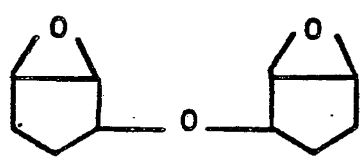

Vinylcyclohexendioxid mit der Formel

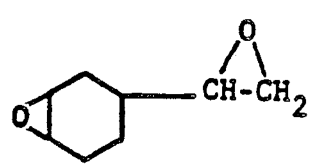

2-(3,4-Epoxycyclohexyl-5,5-spiro)-(3,4-epoxy)cyclohexan-m-dioxan mit der Formel

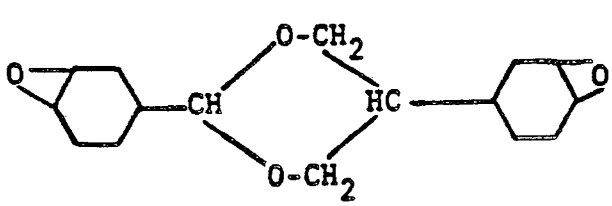

Cyclohexylmethylepoxycyclohexancarboxylat mit der Formel

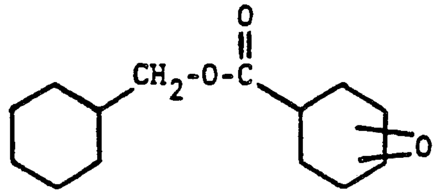

3-(3,4-Epoxycyclohexan)-8,9-epoxy-2,4-dioxaspiro[5,5]-undecan mit der Formel

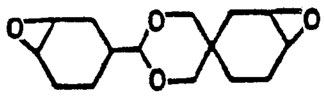

Bis-(3,4-epoxycyclohexylmethyl)-adipinat mit der Formel

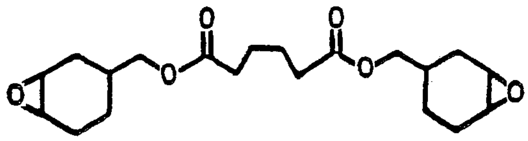

epoxydiertem Pentaerythrittetratallat, epoxydiertem Sojabohnenöl, Octylepoxytallat, epoxydiertem Leinsamenöl und Mischungen derselben.

10. Härtbare Formzusammensetzung nach irgendeinem der Ansprüche 1 bis 9, worin die Epoxyverbindung mit mindestens einer 1,2-Epoxygruppe pro Molekül in einer Menge von 1 bis 30 Gew.-% anwesend ist.

11. Härtbare Formzusammensetzung nach irgendeinem der Ansprüche 1 bis 10, worin der ungesättigte Fettsäureester ausgewählt ist aus Tallöl, Sojabohnenöl, Leinsamenöl, 2-Ethylhexyltallat, Glycerintallat, Pentaerythrittallat, Glycerinoleat und Mischungen derselben.

12. Härtbare Formzusammensetzung nach irgendeinem der Ansprüche 1 bis 11, worin der ungesättigte Fettsäureester in einer Menge von 1 bis 30 Gew.-% anwesend ist.

13. Härtbare Formzusammensetzung nach irgendeinem der Ansprüche 1 bis 12, worin der Zusatz des ausgeprägte Maßstabilität verleihenden, thermoplastischen Polymers ausgewählt ist aus thermoplastischen Polymeren von Vinylacetat, gesättigten Polyestern, Polyalkylacrylaten oder -methacrylaten, Polystyrol oder Mischungen oder Copolymeren derselben.

14. Härtbare Formzusammensetzung nach irgendeinem der Ansprüche 1 bis 12, worin der Zusatz des ausgeprägte Maßstabilität verleihenden, thermoplastischen Polymers ein carboxyliertes Vinylacetatpolymer oder ein Vinylacetathomopolymer oder Copolymer von Vinylacetat und einer ethylenisch ungesättigten Carbonsäure, ausgewählt aus Acrylsäure, Methacrylsäure, Maleinsäure, Fumarsäure und Itaconsäure umfaßt.

15. Härtbare Formzusammensetzung nach irgendeinem der Ansprüche 1 bis 14, worin der Zusatz des ausgeprägte Maßstabilität verleihenden, thermoplastischen Polymers in einer Menge von 5 bis 25 Gew.-% anwesend ist.

16. Härtbare Formzusammensetzung nach irgendeinem der Ansprüche 1 bis 15, die ferner einen freien Radikalinitiator oder eine Initiatormischung umfaßt.

17. Härtbare Formzusammensetzung nach irgendeinem der Ansprüche 1 bis 16, die ferner unsubstituiertes oder substituiertes m- und/oder p-Divinylbenzol, vorzugsweise unsubstituiertes m-Divinylbenzol, unsubstituiertes p-Divinylbenzol oder Mischungen derselben oder derartige Ethylvinylbenzol enthaltende Mischungen umfaßt.

18. Härtbare Formzusammensetzung nach Anspruch 17, worin das unsubstituierte oder substituierte m- und/oder p-Divinylbenzol in einer Menge von 2 bis 75 Gew.-% anwesend ist.

19. Härtbare Formzusammensetzung nach irgendeinem der Ansprüche 1 bis 18, die ferner ein Füllmittel, ausgewählt aus Calciumcarbonat, Ton, Tonerdehydrat, Siliciumdioxid und Mischungen derselben umfaßt.

20. Formgegenstand, hergestellt aus irgendeiner der Zusammensetzungen der Ansprüche 1 bis 19.

21. Formgegenstand nach Anspruch 20, der etwa 10 bis etwa 75 Gew.-% einer oder mehrerer Fasern mit einem Schmelzpunkt oder einer Glasübergangstemperatur über etwa 130°C, vorzugsweise Fasern, ausgewählt aus Glasfasern, Kohlefasern, aromatischen Polyamidfasern und Mischungen derselben, umfaßt.

22. Verbessertes Verfahren zur Herstellung eines faserverstärkten Gegenstandes, das die Stufen umfaßt: (a) Einführen einer gebundenen Bahn aus einer oder mehreren dieser Fasern mit einem Schmelzpunkt oder einer Glasübergangstemperatur über etwa 130°C in eine heizbare Metallpaßform, (b) Einführen einer Flüssigkeit aus einem hitzehärtbaren organischen Material, das beim Erhitzen zu einer hitzegehärteten Harzzusammensetzung härtbar ist, in eine Akkumulatorzone, wobei die Viskosität dieser Flüssigkeit in der Akkumulatorzone im wesentlichen konstant gehalten wird, indem man deren Temperatur

unterhalb derjenigen hält, bei welcher die Aushärtung dieses Materials erheblich ist, (c) Schließen der die Bahn enthaltenden Form, (d) Einspritzen mindestens eines Teils des hitzehärtbaren organischen Materials unter Druck aus der Akkumulatorzone in die Form, um so deren Hohlraum zu füllen, (e) Einleiten der Aushärtung dieser Materialien, indem man sie durch Erhitzen der Form einer Temperatur unterwirft, die über der Temperatur liegt, bei welcher die Aushärtung dieser Materialien eingeleitet wird, und (f) Öffnen der Form und Entfernen des ausgehärteten hitzegehärteten Gegenstandes, wobei die Verbesserung eine Harzzusammensetzung umfaßt, die eine Mischung aus

(i) einem Poly(acrylat), das durch die folgende empirische Formel

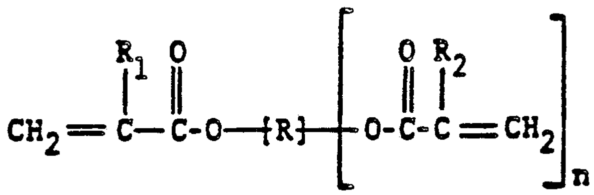

gekennzeichnet ist, worin R der hydroxylgruppenfreie Rest eines organischen mehrwertigen Alkohols ist, der an unterschiedliche Kohlenstoffatome gebundene, alkoholische Hydroxylgruppen enthielt, $R_1$ und $R_2$ unabhängig Wasserstoff oder Methyl bedeuten und n = 1 bis 3 ist,

(ii) einem ethylenisch ungesättigten Monomer, das in (i) löslich und mit diesem copolymerisierbar ist,

(iii) mindestens einem der folgenden Materialien:

(1) einem vernetzbaren Vinylmonomer mit einem Reaktivitätsverhältnis ($r_1$) mit Styrol größer als 1,

(2) einer Epoxyverbindung mit mindestens einer 1,2-Epoxygruppe pro Molekül und

(3) einem ungesättigten Fettsäureester und

(iv) einem Zusatz eines thermoplastischen, ausgeprägte Maßstabilität verleihenden Polymers, der in der Mischung aus (i), (ii) und (iii) löslich ist.

23. Härtbare Formzusammensetzung, die eine Mischung aus

(a) einem Poly(acrylat), das durch die folgende empirische Formel

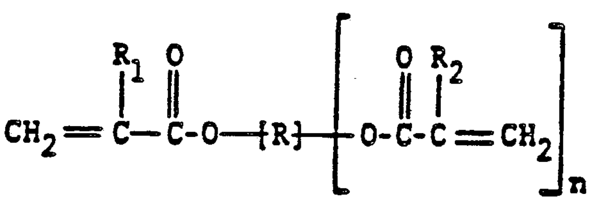

gekennzeichnet ist, worin R der hydroxylgruppenfreie Rest eines organischen mehrwertigen Alkohols ist, der an unterschiedliche Kohlenstoffatome gebundene, alkoholische Hydroxylgruppen enthielt, $R_1$ und $R_2$ unabhängig Wasserstoff oder Methyl bedeuten und n = 1 bis 3 ist,

(b) einem ethylenisch ungesättigten Monomer, das in (a) löslich und mit diesem copolymerisierbar ist,

(c) einem vernetzbaren Vinylmonomeren mit einem Reaktivitätsverhältnis ($r_1$) mit Styrol größer als 1 und mindestens einer der folgenden Verbindungen:

(i) einem zweiten vernetzbaren Vinylmonomer mit einem Reaktivitätsverhältnis ($r_1$) mit Styrol größer als 1,

(ii) einer Epoxyverbindung mit mindestens einer 1,2-Epoxygruppe pro Molekül und

(iii) einem ungesättigten Fettsäureester und

(d) einem Zusatz eines thermoplastischen, ausgeprägte Maßstabilität verleihenden Polymers, der in der Mischung aus (a), (b) und (c) löslich ist.

24. Härtbare Formzusammensetzung nach Anspruch 23, worin das vernetzbare Vinylmonomer mit einem Reaktivitätsverhältnis ($r_1$) mit Styrol größer als 1 Vinylacetat umfaßt.

25. Härtbare Formzusammensetzung nach Anspruch 23 oder 24, worin das zweite vernetzbare Vinylmonomer mit einem Reaktivitätsverhältnis ($r_1$) mit Styrol größer als 1 ausgewählt ist aus Vinylstearat, Vinylnorbornen, Dicyclopentadien, Butylvinylether, Diallylphthalat, Dodecen, 1-Octen, 1-Nonen, 1-Decen, α-Olefinmischungen, einer Verbindung der folgenden Formel

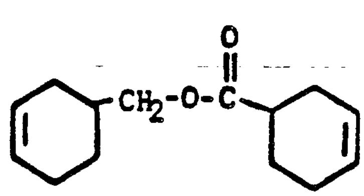

und Mischungen derselben.

26. Verbessertes Verfahren zur Herstellung eines faserverstärkten Gegenstandes, das die Stufen umfaßt: (a) Einführen einer gebundenen Bahn aus einer oder mehreren dieser Fasern mit einem Schmelzpunkt oder einer Glasübergangstemperatur über etwa 130°C in eine heizbare Metallpaßform, (b) Einführen einer Flüssigkeit aus einem hitzehärtbaren organischen Material, das beim Erhitzen zu einer hitzegehärteten Harzzusammensetzung härtbar ist, in eine Akkumulatorzone, wobei die Viskosität dieser Flüssigkeit in der Akkumulatorzone im wesentlichen konstant gehalten wird, indem man deren Temperatur unterhalb derjenigen hält, bei welcher die Aushärtung dieses Materials erheblich ist, (c) Schließen der die Bahn enthaltenden Form, (d) Einspritzen mindestens eines Teils des hitzehärtbaren organischen Materials unter Druck aus der Akkumulatorzone in die Form, um so deren Hohlraum zu füllen, (e) Einleiten der Aushärtung dieser Materialien, indem man sie durch Erhitzen der Form einer Temperatur unterwirft, die über der Temperatur liegt, bei welcher die Aushärtung dieser Materialien eingeleitet wird, und (f) Öffnen der Form und Entfernen des ausgehärteten hitzegehärteten Gegenstandes, wobei die Verbesserung eine Harzzusammensetzung umfaßt, die eine Mischung aus

(i) einem Poly(acrylat), das durch die folgende empirische Formel

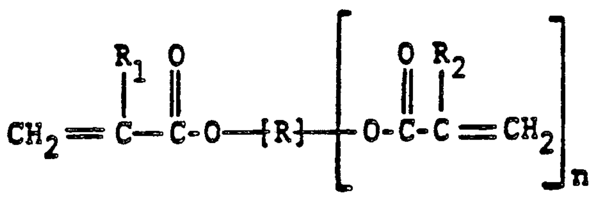

gekennzeichnet ist, worin R der hydroxylgruppenfreie Rest eines organischen mehrwertigen Alkohols ist, der an unterschiedliche Kohlenstoffatome gebundene, alkoholische Hydroxylgruppen enthielt, $R_1$ und $R_2$ unabhängig Wasserstoff oder Methyl bedeuten und n = 1 bis 3 ist,

(ii) einem ethylenisch ungesättigten Monomer, das in (i) löslich und mit diesem copolymerisierbar ist,

(iii) einem vernetzbaren Vinylmonomeren mit einem Reaktivitätsverhältnis ($r_1$) mit Styrol größer als 1 und mindestens einer der folgenden Verbindungen:

(1) einem zweiten vernetzbaren Vinylmonomer mit einem Reaktivitätsverhältnis ($r_1$) mit Styrol größer als 1,

(2) einer Epoxyverbindung mit mindestens einer 1,2-Epoxygruppe pro Molekül und

(3) einem ungesättigten Fettsäureester und

(iv) einem Zusatz eines thermoplastischen, ausgeprägte Maßstabilität verleihenden Polymers, der in der Mischung aus (i), (ii) und (iii) löslich ist, umfaßt.

27. Faserverstärkter Gegenstand, hergestellt nach dem Verfahren von Anspruch 22 oder 26.

**Revendications**

1. Composition à mouler durcissable, comprenant un mélange:

(a) d'un poly(acrylate), caractérisé par la formule générale suivante:

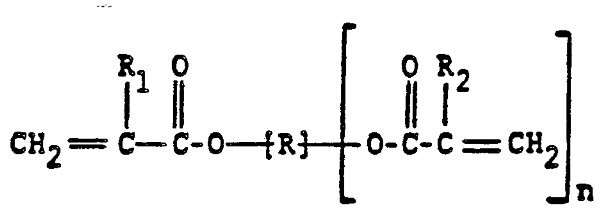

dans laquelle R est le résidu dépourvu de groupes hydroxy d'un alcool organique polyhydroxylique qui contenait des groupes hydroxyle alcooliques liés à des atomes différents de carbone, $R_1$ et $R_2$ représentent indépendamment l'hydrogène ou un groupe méthyle et n a une valeur de 1 à 3;

(b) d'un monomère à non-saturation éthylénique qui est soluble dans (a) et copolymérisable avec lui;

(c) d'au moins l'un des composants suivants:

(i) un ou plusieurs monomères vinyliques réticulables ayant un degré de réactivité ($r_1$) avec le styrène supérieur à l'unité;

(ii) un composé époxy ayant au moins un groupe 1,2-époxy par molécule; et

(iii) un ester d'acide gras non saturé; et

(d) d'un additif polymère thermoplastique à profil bas qui est soluble dans le mélange de (a), (b) et (c).

2. Composition moulée durcissable suivant la revendication 1, dans laquelle le poly(acrylate) consiste en un ou plusieurs des composés suivants: diméthacrylate de bisphénol A éthoxylé, diacrylate de bisphénol A éthoxylé, diméthacrylate de bisphénol A propoxylé, diacrylate de bisphénol A propoxylé, diméthacrylate de tétraéthylèneglycol, diméthacrylate de diéthylèneglycol, diacrylate de tétraéthylèneglycol, diacrylate de diéthylèneglycol, diméthacrylate d'éthylèneglycol, triacrylate de triméthylolpropane et

triméthacrylate de triméthylolpropane.

3. Composition à mouler durcissable suivant la revendication 1 ou 2, dans laquelle le poly(acrylate) est mélangé avec au moins une matière organique thermodurcissable contenant 2 ou plus de 2 doubles liaisons carbone-à-carbone polymèrisables.

4. Composition à mouler durcissable suivant l'une quelconque des revendications 1 à 3, dans laquelle le poly(acrylate) est présent en une quantité de 10 à 75% en poids.

5. Composition à mouler durcissable suivant la revendication 1, dans laquelle le monomère à non-saturation éthylénique comprend du styrène ou un mélange de styrène et de méthacrylate de 2-hydroxyéthyle.

6. Composition à mouler durcissable suivant l'une quelconque des revendications 1 à 5, dans laquelle le monomère à non-saturation éthylénique est présent en une quantité de 10 à 75% en poids.

7. Composition à mouler durcissable suivant la revendication 1, dans laquelle le monomère vinylique réticulable ayant un degré de réactivité ($r_1$) avec le styrène supérieur à l'unité est choisi entre l'acétate de vinyle, le stéarate de vinyle, le vinylnorbornène, le dicyclopentadiène, l'éther de butyle et de vinyle, le phtalate de diallyle, le dodécène, le 1-octène, le 1-nonène, le 1-décène, des mélanges d'alpha-oléfines, un composé de formule suivante:

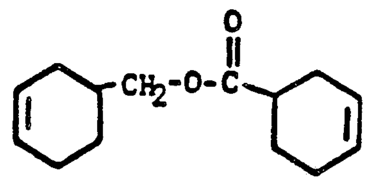

et des mélanges de ces monomères.

8. Composition à mouler durcissable suivant l'une quelconque des revendications 1 à 7, dans laquelle le monomère vinylique réticulable ayant un degré de réactivité ($r_1$) avec le styrène supérieur à l'unité est présent en une quantité de 1 à 30% en poids.

9. Composition à mouler durcissable suivant l'une quelconque des revendications 1 à 8, dans laquelle le composé époxy ayant au moins un groupe 1,2-époxy par molécule est choisi entre

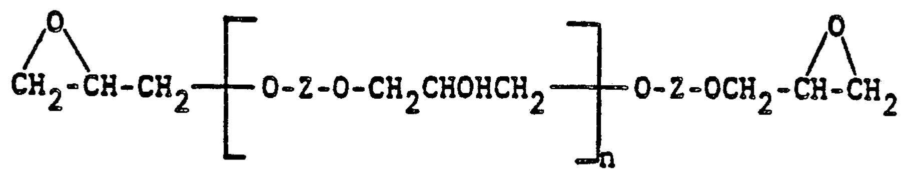

où n est un nombre entier représentant le nombre de motifs répétés et a une valeur de 0 à 10, et Z est un radical arylène ayant 6 à 20 atomes de carbone; le 3,4-époxycyclohexanecarboxylate de 3,4-époxycyclohexylméthyle de formule:

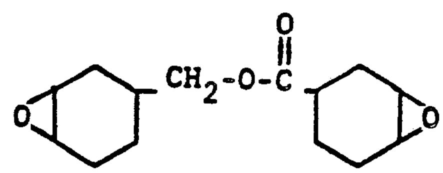

l'éther de bis(2,3-époxycyclopentyle) de formule:

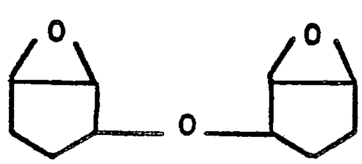

le dioxyde de vinylcyclohexène de formule:

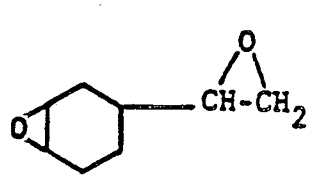

le 2-(3,4-époxycyclohexyl-5,5-spiro)-(3,4-époxy)cyclohexane-m-dioxanne de formule:

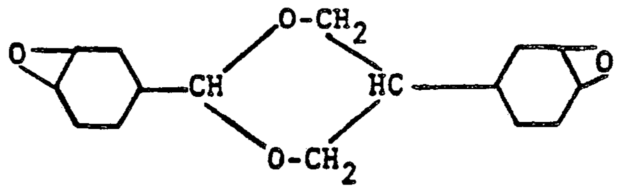

l'époxycyclohexanecarboxylate de cyclohexylméthyle de formule:

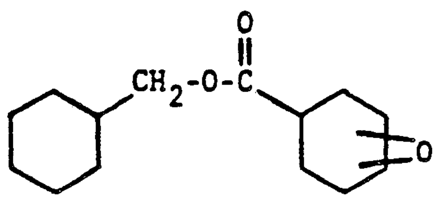

le 3-(3,4-époxycyclohexane)-8,9-époxy-2,4-dioxaspiro[5.5]undécane de formule:

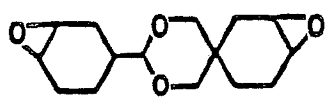

l'adipate de bis(3,4-époxycyclohexylméthyle) de formule:

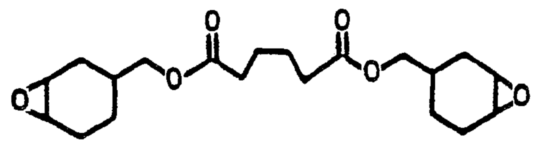

le tétratallate de pentaérythritol époxydé, l'huile de soja époxydé, l'époxytallate d'octyle; l'huile de lin époxydée; et des mélanges de ces composés.

10. Composition à mouler durcissable suivant l'une quelconque des revendications 1 à 9, dans laquelle le composé époxy ayant au moins un groupe 1,2-époxy par molécule est présent en une quantité de 1 à 30% en poids.

11. Composition à mouler durcissable suivant l'une quelconque des revendications 1 à 10, dans laquelle l'ester d'acide gras non saturé est choisi entre le talloil, l'huile de soja, l'huile de lin, le tallate de 2-éthylhexyle, le tallate de glycérol, le tallate de pentaérythritol, l'oléate de glycérol et leurs mélanges.

12. Composition à mouler durcissable suivant l'une quelconque des revendications 1 à 11, dans laquelle l'ester d'acide gras non saturé est présent en une quantité de 1 à 30% en poids.

13. Composition à mouler durcissable suivant l'une quelconque des revendications 1 à 12, dans laquelle l'additif polymère thermoplastique à profil bas est choisi entre des polymères thermoplastiques d'acétate de vinyle, des polyesters saturés, des polyacrylates d'alkyle ou des polyméthacrylates d'alkyle, un polystyrène ou leurs mélanges ou leurs copolymères.

14. Composition à mouler durcissable suivant l'une quelconque des revendications 1 à 12, dans laquelle l'additif polymère thermoplastique à profil bas comprend un polymère d'acétate de vinyle carboxylé ou un homopolymère d'acétate de vinyle ou un copolymère d'acétate de vinyle et d'un acide carboxylique à non-saturation éthylénique choisi entre l'acide acrylique, l'acide méthacrylique, l'acide maléique, l'acide fumarique et l'acide itaconique.

15. Composition à mouler durcissable suivant l'une quelconque des revendications 1 à 14, dans laquelle l'additif polymère thermoplastique à profil bas est présent en une quantité de 5 à 25% en poids.

16. Composition à mouler durcissable suivant l'une quelconque des revendications 1 à 15, comprenant en outre un initiateur de radicaux libres ou un mélange de ces initiateurs.

17. Composition à mouler durcissable suivant l'une quelconque des revendications 1 à 16, comprenant en outre du méta- et/ou du para-divinylbenzène non substitué ou substitué, de préférence du méta-divinylbenzène non substitué, du para-divinylbenzène non substitué ou leurs mélanges, ou des mélanges de ces composés contenant de l'éthylvinylbenzène.

18. Composition à mouler durcissable suivant la revendication 17, dans laquelle le méta- et/ou le paradivinylbenzène non substitué ou substitué sont présents en une quantité de 2 à 75% en poids.

19. Composition à mouler durcissable suivant l'une quelconque des revendications 1 à 18, comprenant en outre une charge choisie entre le carbonate de calcium, l'argile, l'alumine hydratée, la silice et leurs mélanges.

20. Article moulé préparé à partir de l'une quelconque des compositions des revendications 1 à 19.

21. Article moulé suivant la revendication 20, qui contient environ 10 à environ 75% en poids d'une ou plusieurs fibres ayant un point de fusion ou une température de transition vitreuse au-dessus d'environ 130°C, de préférence des fibres choisies entre le verre en fibre, des fibres de carbone, des fibres de polyamide aromatique, et leurs mélanges.

22. Procédé perfectionné de production d'un article renforcé par des fibres, qui comprend les étapes consistant (a) à prévoir dans un moule métallique en deux parties pouvant être chauffé, une bande liée d'une ou plusieurs desdites fibres ayant un point de fusion ou une température de transition vitreuse au-dessus d'environ 130°C; (b) à prévoir dans une zone d'accumulation une masse liquide formée d'une matière organique thermodurcissable qui peut durcir par chauffage en donnant une composition de résine thermodurcie, la viscosité de ladite masse liquide étant maintenue essentiellement constante dans la zone d'accumulation par le maintien de sa température au-dessous de celle à laquelle le durcissement desdites matières est important, (c) à fermer le moule contenant ladite bande, (d) à injecter au moins une portion de ladite matière organique thermodurcissable sous pression depuis la zone d'accumulation dans le moule afin de remplir ainsi la cavité du moule, (e) à déclencher le durcissement desdites matières en les exposant, par chauffage du moule, à une température qui est au-dessus de celle à laquelle le durcissement desdites matières est déclenché, et (f) à ouvrir le moule et à démouler l'article thermodurci réticulé, le perfectionnement résidant dans l'utilisation d'une composition de résine comprenant un mélange:

(i) d'un poly(acrylate) caractérisé par la formule générale suivante:

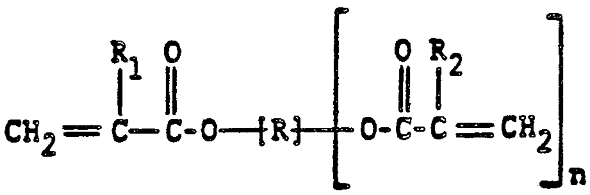

dans laquelle R est le résidu dépourvu de groupes hydroxy d'un alcool organique polyhydroxylique qui contenait des groupes hydroxyle alcooliques liés à différents atomes de carbone, $R_1$ et $R_2$ représentent indépendamment l'hydrogène ou le groupe méthyle et n a une valeur de 1 à 3;

(ii) d'un monomère à non-saturation éthylénique qui est soluble dans (i) et copolymérisable avec lui;

(iii) d'au moins l'un des composants suivants:

(1) un monomère vinylique réticulable ayant un degré de réactivité ($r_1$) avec le styrène supérieur à l'unité;

(2) un composé époxy ayant au moins un groupe 1,2-époxy par molécule; et

(3) un ester d'acide gras non saturé et

(iv) d'un polymère thermoplastique à profil bas qui est soluble dans le mélange de (i), (ii) et (iii).

23. Composition à mouler durcissable, comprenant un mélange:

(a) d'un poly(acrylate), caractérisé par la formule générale suivante:

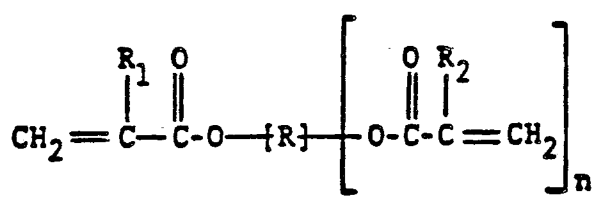

dans laquelle R est le résidu pourvu de groupes hydroxy d'un alcool organique polyhydroxylique qui contenait des groupes hydroxyle alcooliques liés à différents atomes de carbone, $R_1$ et $R_2$ représentent indépendamment l'hydrogène ou le groupe méthyle et n a une valeur de 1 à 3;

(b) d'un monomère à non-saturation éthylénique qui est soluble dans (a) et copolymérisable avec lui,

(c) d'un monomère vinylique réticulable ayant un degré de réactivité ($r_1$) avec le styrène supérieur à l'unité, et au moins l'un des composants suivants:

(i) un second monomère vinylique réticulable ayant un degré de réactivité ($r_1$) avec le styrène supérieur à l'unité;

(ii) un composé époxy ayant au moins un groupe 1,2-époxy par molécule; et

(iii) un ester d'acide gras non saturé; et

(d) d'un additif polymère thermoplastique à profil bas qui est soluble dans le mélange de (a), (b) et (c).

24. Composition à mouler durcissable suivant la revendication 23, dans laquelle le monomère vinylique réticulable ayant un degré de réactivité ($r_1$) avec le styrène supérieur à l'unité comprend l'acétate de vinyle.

25. Composition moulée durcissable suivant la revendication 23 ou 24, dans laquelle le second monomère vinylique réticulable ayant un degré de réactivité ($r_1$) avec le styrène supérieur à l'unité est choisi entre le stéarate de vinyle, le vinylnorbornène, le dicyclopentadiène, l'éther de butyle et de vinyle, le

phtalate de diallyle, le dodécène, le 1-octène, le 1-nonène, le 1-décène, des mélanges d'alpha-oléfines, un composé de formule suivante:

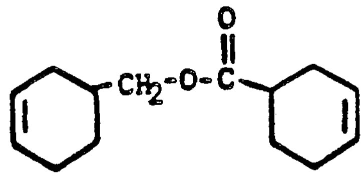

et des mélanges de ces monomères.

26. Procédé perfectionné de production d'un article renforcé par des fibres, qui comprend les étapes consistant (a) à prévoir dans un moule métallique en deux parties pouvant être chauffé, une bande liée d'une ou plusieurs fibres ayant un point de fusion ou une température de transition vitreuse supérieure à environ 130°C, (b) à prévoir dans une zone d'accumulation une masse liquide d'une matière organique thermodurcissable qui peut durcir sous l'effet de la chaleur en formant une composition de résine thermodurcie, la viscosité de ladite masse liquide étant maintenue essentiellement constante dans la zone d'accumulation par le maintien de sa température au-dessous de celle à laquelle le durcissement desdites matières est important, (c) à fermer le moule contenant ladite bande, (d) à injecter au moins une portion de la matière organique thermodurcissable sous pression depuis la zone d'accumulation dans le moule pour remplir ainsi la cavité de moule, (e) à déclencher le durcissement desdites matières en les exposant, par chauffage du moule, à une température qui est supérieure à la température à laquelle le durcissement desdites matières est déclenché, et (f) à ouvrir le moule et à en décharger l'article thermodurci réticulé, le perfectionnement consistant à utiliser une composition de résine comprenant un mélange:

(i) d'un poly(acrylate) caractérisé par la formule générale suivante:

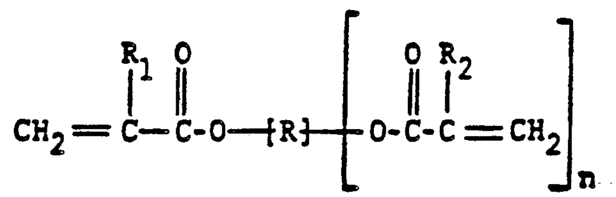

dans laquelle R est le résidu dépourvu de groupes hydroxy d'un alcool polyhydroxylique organique qui contenait des groupes hydroxyle alcooliques liés à différents atomes de carbone, $R_1$ et $R_2$ représentent indépendamment l'hydrogène ou le groupe méthyle et n a une valeur de 1 à 3;

(ii) d'un monomère à non-saturation éthylénique qui est soluble dans (i) et copolymérisable avec lui;

(iii) d'un monomère vinylique réticulable ayant un degré de réactivité ($r_1$) avec le styrène supérieur à l'unité et au moins l'un des composants suivants:

(1) un second monomère vinylique réticulable ayant un degré de réactivité ($r_1$) avec le styrène supérieur à l'unité;

(2) un composé époxy ayant au moins un groupe 1,2-époxy par molécule; et

(3) un ester d'acide gras non saturé; et

(iv) d'un additif polymère thermoplastique à profil bas qui est soluble dans le mélange de (i), (ii) et (iii).

27. L'article renforcé par des fibres produit par le procédé de la revendication 22 ou 26.